# EUROPÄISCHE PATENTSCHRIFT

(11) **EP 2 753 559 B1**
(45) Veröffentlichungstag und Bekanntmachung des Hinweises auf die Patenterteilung: **25.11.2015**
(21) Anmeldenummer: 12780073.8
(22) Anmeldetag: 05.09.2012
(51) Int. Cl.: B65G 1/137

(54) **KOMMISSIONIERSTATION UND VERFAHREN ZUM KOMMISSIONIEREN VON ARTIKELN AUS LADEHILFSMITTELN**
ORDER PICKING STATION, AND METHOD FOR THE ORDER PICKING OF ARTICLES FROM LOADING AIDS
POSTE DE PRÉPARATION DE COMMANDES ET PROCÉDÉ DE PRÉPARATION DE COMMANDES D'ARTICLES PROVENANT DE MOYENS DE CHARGEMENT

(30) Priorität: 05.09.2011 AT 12612011
(43) Veröffentlichungstag der Anmeldung: 16.07.2014
(73) Patentinhaber: TGW Mechanics GmbH, 4600 Wels (AT)
(72) Erfinder: RADWALLNER, Günther, A-4840 Vöcklabruck (AT); WOLKERSTORFER, Christoph, A-4600 Wels (AT)
(74) Vertreter: Burger, Hannes
(86) Internationale Anmeldenummer: PCT/AT2012/050126
(87) Internationale Veröffentlichungsnummer: WO 2013/033743

(56) Entgegenhaltungen:
- EP-A1- 2 050 695
- EP-A1- 2 098 464
- WO-A1-2011/103404
- JP-A- 4 116 001

## Beschreibung

Die Erfindung betrifft eine Kommissionierstation und ein Verfahren zum Kommissionieren von Artikeln aus Ladehilfsmitteln, wie Behälter, Karton, Tablar etc., durch eine Kommissionierperson, welche an auf unterschiedlichem Höhenniveau angeordnete automatisierte Fördertechniken anschließt, wobei auf einer ersten Fördertechnik Ladehilfsmittel zur Kommissionierstation angefördert und auf einer zweiten Fördertechnik Ladehilfsmittel von der Kommissionierstation abgefördert werden, und eine Ladehilfsmittel-Andienungsvorrichtung, eine automatisierte erste Ladehilfsmittel-Transportvorrichtung zum Antransport von Ladehilfsmitteln zu der Ladehilfsmittel-Andienungsvorrichtung und eine automatisierte zweite Ladehilfsmittel-Transportvorrichtung zum Abtransport von Ladehilfsmitteln von der Ladehilfsmittel-Andienungsvorrichtung umfasst, wobei die erste Ladehilfsmittel-Transportvorrichtung eine im Wesentlichen in vertikaler Richtung bewegbare erste Aufnahmeeinheit für ein Ladehilfsmittel und die zweite Ladehilfsmittel-Transportvorrichtung eine im Wesentlichen in horizontaler Richtung bewegbare zweite Aufnahmeeinheit für ein Ladehilfsmittel aufweist.

In jüngster Zeit ist man dazu übergegangen, den Kommissioniervorgang nach dem Prinzip "Ware zum Mann" zu gestalten. Beim Prinzip Ware zum Mann ist der Kommissionierperson ein fester Arbeitsplatz zugewiesen, von dem sie sich so wenig und selten wie möglich wegbewegt. Die zu kommissionierenden Artikel werden zur Kommissionierperson transportiert. Dies steigert die Effizienz eines Kommissioniersystems und erfüllt die hohen ergonomischen Anforderungen, die heutzutage immer weiter in den Vordergrund treten.

Unter dem Begriff "Artikel" sind solche Gegenstände zu verstehen, die in einem Artikellager lagerbar sind. Artikel können z. B. Arzneimittel, Werkzeugteile oder ähnliches sein, die von Kunden in beliebiger Anzahl und Vielzahl bestellt werden können. Diese bestellten Artikel werden dann zu einem einzigen Auftrag zusammengefasst, wobei die Artikel dann in einen Zielbehälter kommissioniert und die kommissionierten Artikel dem Kunden geliefert werden.

Unter einem Zielbehälter wird ein Behälter verstanden, in den zu kommissionierende Artikel gelegt werden. Ein Zielbehälter kann eine Vielzahl von verschiedenen Artikeln aufnehmen, bis der ihm zugeordnete Kommissionierauftrag abgearbeitet ist, d. h. bis alle zum Kommissionierauftrag gehörenden Artikel aus dem Regallager zum Arbeitsplatz transportiert sind und dort von der Kommissionierperson in den entsprechenden Zielbehälter gelegt sind.

Derartige Kommissionierverfahren werden über die aus der DE 103 07 949 A1, DE 10 2005 045 971 A1, EP 1 572 558 A1 und US 5,246,332 A bekannten Kommissioniersysteme realisiert.

Die EP 2 098 464 A1 offenbart ein Kommissioniersystem zum Kommissionieren von Artikeln aus Quellbehältern in Zielbehälter durch eine Kommissionierperson, mit einer Kommissionierstation für Quellbehälter und mehreren Kommissionierstationen für Zielbehälter, wobei letztere Kommissionierstationen Zielbehälter-Umlauffördervorrichtungen umfassen, von welchen jede jeweils derart eingerichtet ist, dass von ihr mehrere Zielbehälter entlang eines Zielbehälter-Förderkreises umlaufend wiederholt der Kommissionierperson zugeführt werden, bis der jeweilige Zielbehälter entsprechend einem Kommissionierauftrag mit Artikeln aus einem oder mehreren Quellbehältern kommissioniert ist. Bedingt durch die wiederkehrende Bereitstellung von Zielbehältern an der jeweiligen Umlauffördervorrichtung sind nicht nur entsprechend leistungsfähige Antriebe erforderlich, sondern ist auch der Energieverbrauch hoch. Außerdem ist an einer Kommissionierstation eine Entkoppelung der Behälterbewegungen entlang des Transportweges für die Behälter nicht möglich, da es der Kommissionierstation an einer, von der Umlauffördervorrichtung getrennten Andienungsvorrichtung fehlt.

Eine gattungsgemäße Kommissionierstation für Quellbehälter ist auch aus der EP 2 050 695 A1 bekannt, die eine automatisierte erste Quellbehälter-Transportvorrichtung zum Antransport von Quellbehältern zu einer Andienungsvorrichtung und eine automatisierte zweite Quellbehälter-Transportvorrichtung zum Abtransport von Quellbehältern von der Andienungsvorrichtung umfasst, wobei die erste Quellbehälter-Transportvorrichtung eine erste Aufnahmeeinheit für einen Quellbehälter und die zweite Quellbehälter-Transportvorrichtung eine zweite Aufnahmeeinheit für einen Quellbehälter aufweist. Die Transportvorrichtungen weisen jeweils eine Antriebsstation auf, wobei die Antriebe der Antriebsstationen durch eine Steuereinheit sehr präzise gesteuert werden müssen. Dadurch erhöht sich der Steuerungsaufwand und sind durch die Mindestanzahl von zwei Antrieben, die Herstellkosten für die Kommissionierstation hoch. Auch ist damit ein höherer Energiebedarf verbunden.

Die DE 20 2010 005 244 U1 offenbart eine Kommissionierstation zum Kommissionieren von Artikeln aus Ladehilfsmitteln, welche eine vertikal verstellbare Ladehilfsmittel-Transportvorrichtung (Hubgabel) zum Antransport von Ladehilfsmitteln in eine Andienungsposition und eine an dieser gelagerte zweite Ladehilfsmittel-Transportvorrichtung (Doppelgurtförderer) zum Abtransport von Ladehilfsmitteln aus der Andienungsposition umfasst.

Ferner ist aus der WO 2011/103404 A1 eine Kommissionierstation zum Kommissionieren von Artikeln aus Ladehilfsmitteln bekannt, welche eine automatisierte erste Ladehilfsmittel-Transportvorrichtung (elevator assembly) zum Antransport von Ladehilfsmitteln in eine Andienungsposition und eine automatisierte zweite Ladehilfsmittel-Transportvorrichtung (extractor assembly) zum Abtransport von Ladehilfsmitteln aus der Andienungsposition umfasst. Die erste Ladehilfsmittel-Transportvorrichtung weist eine im Wesentlichen in vertikaler Richtung bewegbare erste Aufnahmeeinheit für ein Ladehilfsmittel und die zweite Ladehilfsmittel-Transportvorrichtung eine im Wesentlichen in horizontaler Richtung bewegbare zweite Aufnahmeeinheit für ein Ladehilfsmittel auf. Nach einer ersten Ausführung ist ein Positionierantrieb mit zwei Antriebsstationen vorgesehen, mittels welcher die Verstellbewegungen der ersten Aufnahmeeinheit und der zweiten Aufnahmeeinheit voneinander entkoppelt werden können. So kann die zweite Aufnahmeeinheit über die zweite Antriebsstation bereits aus der Andienungsposition des Ladehilfsmittels zurückbewegt werden, während die erste Aufnahmeeinheit über die erste Antriebsstation noch nicht angetrieben wird und in einer Übernahmeposition für das Ladehilfsmittel steht. Nach einer zweiten Ausführung ist es vorgesehen, dass der Positionierantrieb über eine gemeinsame Antriebsstation wechselweise zwei voneinander unabhängige Zugmitteltriebe antreibt und dadurch eine zeitlich versetzte (zeitlich entkoppelte) Verstellbewegung der Aufnahmeeinheiten ermöglicht wird. Dabei bedient man sich einem Getriebe mit aufwendigen Getriebebauelementen zwischen einem Elektromotor und zwei Antriebswellen. Die erste Antriebswelle ist mit dem ersten Zugmitteltrieb für die erste Aufnahmeeinheit und die zweite Antriebswelle ist mit dem zweiten Zugmitteltrieb für die zweite Aufnahmeeinheit gekuppelt. Ein solches Getriebe erfordert eine regelmäßige Wartung und erzeugt im Betrieb relativ laute Geräusche, welche von einer Kommissionierperson als unangenehm empfunden werden können.

Der vorliegenden Erfindung liegt die Aufgabe zugrunde, eine Kommissionierstation und ein Verfahren zum Kommissionieren von Artikeln aus Quell-Ladehilfsmitteln zu schaffen, welche kompakt gebaut ist und sich durch einen wirtschaftlichen Betrieb auszeichnet. Die Kommissionierstation soll mit Vorteil in einem Kommissioniersystem und das Kommissioniersystem mit Vorteil in einem Lagersystem verwendbar sein.

Die Aufgabe der Erfindung wird dadurch gelöst, dass die erste Aufnahmeeinheit und zweite Aufnahmeeinheit mit einem gemeinsamen, reversierbaren Positionierantrieb gekoppelt sind, wobei der Positionierantrieb zumindest einen Zugmitteltrieb aufweist und dass sowohl die erste Aufnahmeeinheit als auch die zweite Aufnahmeeinheit mit dem zumindest einen Zugmitteltrieb verbunden und über denselben zumindest einen Zugmitteltrieb bewegungsgekoppelt sind. Vorzugsweise umfassen die Aufnahmeeinheiten jeweils einen Führungsrahmen und eine mit diesem verbundene Aufnahmeplattform für ein Ladehilfsmittel. Der Führungsrahmen der ersten Aufnahmeeinheit ist über zumindest ein Befestigungsmittel mit dem Zugmitteltrieb in einem ersten Längsabschnitt und der Führungsrahmen der zweiten Aufnahmeeinheit ist über zumindest ein Befestigungsmittel mit dem Zugmitteltrieb in einem zweiten Längsabschnitt fest verbunden. Damit sind die Aufnahmeeinheiten relativ zum Zugmitteltrieb bzw. Zugmittel in einem festen Abstand gehalten, welcher sich während der Verstellbewegung der Aufnahmeeinheiten nicht ändert.

Die Kommissionierstation ist zur Durchführung des Verfahrens nach einem der Ansprüche 13 bis 16 geeignet.

Die Aufgabe der Erfindung wird auch dadurch gelöst, dass die erste Aufnahmeeinheit und zweite Aufnahmeeinheit über zumindest einen Zugmitteltrieb eines gemeinsamen Positionierantriebes gleichzeitig und derart pendelnd gemeinsam in die jeweilige der entgegengesetzten Bewegungsrichtungen entlang eines Transportweges zwischen den Fördertechniken bewegt werden, dass ein erstes Ladehilfsmittel zwischen einer der Fördertechniken und einer der Aufnahmeeinheiten gefördert und ein zweites Ladehilfsmittel von der anderen der Aufnahmeeinheiten an der Andienungsvorrichtung bereitgestellt wird. Somit werden beide Aufnahmeeinheiten gleichzeitig und gleichsinnig entweder in die erste Bewegungsrichtung jeweils in ihre Übernahme- bzw. Übergabepositionen oder in die zweite Bewegungsrichtung jeweils in ihre Übergabe- bzw. Übernahmepositionen bewegt. Dabei werden die Aufnahmeeinheiten gleichzeitig aus der Übernahme- bzw. Übergabepositionen heraus beschleunigt und gleichzeitig in die Übergabe- bzw. Übernahmepositionen hinein abgebremst.

Von Vorteil ist, dass die erste Aufnahmeeinheit zum Transport eines ersten Ladehilfsmittels pendelnd zwischen der ersten Fördertechnik und der Andienungsvorrichtung und die zweite Aufnahmeeinheit zum Transport eines zweiten Ladehilfsmittels pendelnd zwischen der Andienungsvorrichtung und der zweiten Fördertechnik bewegt werden kann. Demnach wird die Richtung der Verstellbewegung für die erste Aufnahmeeinheit und zweite Aufnahmeeinheit synchron umgedreht, wenn ein erstes Ladehilfsmittel eine Übernahme- bzw. Übergabeposition an der ersten Fördertechnik und ein zweites Ladehilfsmittel eine Übergabe- bzw. Übernahmeposition an der zweiten Fördertechnik erreicht.

Günstig ist es, wenn der Positionierantrieb eine Antriebsstation mit einem reversierbaren Antriebsmotor, insbesondere einen reversierbaren Elektromotor, und zumindest einen Zugmitteltrieb umfasst. Dadurch wird ein sehr kompakter Aufbau für den Positionierantrieb erreicht.

Umfasst der Positionierantrieb eine Antriebsstation und zu beiden Seiten eines sich zwischen den Fördertechniken erstreckenden Transportweges für die Ladehilfsmittel angeordnete, synchron antreibbare Zugmitteltriebe, wird eine ungehinderte Förderbewegung für die Ladehilfsmittel zwischen den Transportvorrichtungen ermöglicht.

Die Antriebsstation umfasst einen einzigen reversierbaren Antriebsmotor, insbesondere reversierbaren Elektromotor, welcher zwischen den Umkehrpositionen für die Aufnahmeeinheiten im Hinblick auf eine geräuscharme Kommissionierung bzw. Förderbewegung, Beschleunigungswerte und Fördergeschwindigkeiten der Ladehilfsmittel optimiert betrieben werden kann.

Vorteilhaft ist es, wenn die erste Aufnahmeeinheit für ein Ladehilfsmittel mit dem Positionierantrieb, insbesondere mit dem oder den Zugmitteltrieben, derart gekoppelt ist, dass die Aufnahmeeinheit zwischen einer Übernahme- bzw. Übergabeposition an der ersten Fördertechnik und einer Übergabe- bzw. Übernahmeposition an der Andienungsvorrichtung verstellbar ist. Die erste Aufnahmeeinheit kann zwischen den die Übergabe- und Übernahmepositionen definierenden Umkehrpositionen für die Aufnahmeeinheit an der ersten Fördertechnik und Andienungsvorrichtung pendelnd hin und her bewegt werden.

Die erste Aufnahmeeinheit für ein Ladehilfsmittel ist über zumindest ein an dieser gelagertes Führungsorgan auf einer die Kommissionierstation aufweisenden Führungsanordnung abgestützt. Die Führungsanordnung ist bevorzugt ortsfest (stationär). Dadurch kann das Gewicht, welches auf der ersten Aufnahmeeinheit auflastet, auf die stationäre Führungsanordnung und gegebenenfalls Rahmenteile der Kommissionierstation abgetragen werden.

Eine besonders kompakte Bauweise der Kommissionierstation wird erreicht, wenn die erste Aufnahmeeinheit einen Führungsrahmen mit den Führungsorganen und eine an diesem vorkragende Aufnahmeplattform für ein Ladehilfsmittel umfasst, wobei der Führungsrahmen mit dem Positionierantrieb, insbesondere mit dem oder den Zugmitteltrieben, verbunden ist.

Vorteilhaft ist es, wenn die zweite Aufnahmeeinheit für ein Ladehilfsmittel mit Positionierantrieb, insbesondere dem oder den Zugmitteltrieben, derart gekoppelt ist, dass die Aufnahmeeinheit zwischen einer Übernahme- bzw. Übergabeposition an der Andienungsvorrichtung und einer Übergabe- bzw. Übernahmeposition an der zweiten Fördertechnik verstellbar ist. Die zweite Aufnahmeeinheit kann zwischen den die Übergabe- und Übernahmepositionen definierenden Umkehrpositionen für die Aufnahmeeinheit an der zweiten Fördertechnik und Andienungsvorrichtung pendelnd hin- und her bewegt werden. Dabei sind die erste Aufnahmeeinheit und zweite Aufnahmeeinheit mit gegenseitigem (festem) Abstand in Richtung des Transportweges mit dem Positionierantrieb gekoppelt. Der Abstand entspricht dabei vorzugsweise zumindest der zweifachen Ladehilfsmittel-Längsabmessung, sodass eine Kollision zwischen den Aufnahmeeinheiten auf der Verstellbewegung bzw. Ladehilfsmitteln auf der Förderbewegung entlang des Transportweges vermieden wird.

Die zweite Aufnahmeeinheit für ein Ladehilfsmittel ist über zumindest ein an dieser gelagertes Führungsorgan auf einer die Kommissionierstation aufweisenden Führungsanordnung abstützbar. Die Führungsanordnung ist bevorzugt ortsfest (stationär). Dadurch kann das Gewicht, welches auf der zweiten Aufnahmeeinheit auflastet, auf die stationäre Führungsanordnung und gegebenenfalls Rahmenteile der Kommissionierstation abgetragen werden.

Eine besonders kompakte Bauweise der Kommissionierstation wird auch erreicht, wenn die zweite Aufnahmeeinheit einen Führungsrahmen mit dem zumindest einen Führungsorgan und eine an diesem gelagerte Aufnahmeplattform für ein Ladehilfsmittel umfasst, wobei der Führungsrahmen mit dem Positionierantrieb, insbesondere mit dem oder den Zugmitteltrieben, verbunden ist.

Eine sehr geräuscharme Übergabe bzw. Übernahme eines Ladehilfsmittels zwischen der zweiten Aufnahmeeinheit und der zweiten Fördertechnik wird erreicht, wenn sich die Führungsanordnung in Richtung (entlang) eines Transportweges zwischen der LadehilfsmittelAndienungsvorrichtung und der zweiten Fördertechnik erstreckt, wobei die Führungsanordnung einen Führungsabschnitt aufweist, welcher eine geneigte Auffahrebene für das Führungsorgan der zweiten Aufnahmeeinheit ausbildet.

Weist die Aufnahmeplattform eine Aufnahmefläche für zumindest ein Ladehilfsmittel und ein an der Aufnahmefläche vorragendes Rückhalteelement auf, kann sich das Ladehilfsmittel auf der Horizontalbewegung der zweiten Aufnahmeeinheit gegen das Rückhalteelement abstützen, sodass die Ladehilfsmittel mit hohen Beschleunigungswerten beaufschlagt werden können. Dadurch kann die Wechselzeit für die Umsetzung eines Ladehilfsmittels zwischen den Fördertechniken wesentlich reduziert und die Durchsatzleistung an der Kommissionierstation erhöht werden.

Die Aufnahmeplattform der ersten Aufnahmeeinheit und/oder zweiten Aufnahmeeinheit kann ferner eine gegenüber einer Horizontalebene und in Richtung der Andienungsvorrichtung um einen Winkel nach unten geneigte Aufnahmefläche aufweisen, was die Anlage des Ladehilfsmittels am Rückhalteelement und das Einsehen auf den Inhalt eines zur Andienungsvorrichtung angeförderten Ladehilfsmittels begünstigt. Dadurch kann sich eine Kommissionierperson schon sehr bald auf den Kommissioniervorgang vorbereiten und wird eine sehr ergonomische Kommissionierung ermöglicht.

Von Vorteil ist es auch, wenn die zweite Fördertechnik in einem ersten Förderabschnitt eine Übergabevorrichtung und in einem zweiten Förderabschnitt eine Fördervorrichtung umfasst, wobei die Übergabevorrichtung die Fördervorrichtung und die zweite Aufnahmeeinheit derart verbindet, dass ein Ladehilfsmittel zwischen der zweiten Fördertechnik und der zweiten Aufnahmeeinheit förderbar ist. Dadurch wird eine Entkoppelung zwischen der Verstellbewegung der zweiten Aufnahmeeinheit und der Verstellbewegung der zweiten Fördertechnik erreicht, sodass die zweite Aufnahmeeinheit bereits wieder aus der Übergabe bzw. Übernahmeposition an der zweiten Fördertechnik in die Übergabe bzw. Übernahmeposition an der Andienungsvorrichtung verstellt werden kann, sobald das Ladehilfsmittel bis knapp über seine vertikale Schwerachse hinweg auf der zweiten Fördertechnik auflastet. Auch kann die Fördergeschwindigkeit des Ladehilfsmittels auf der zweiten Fördertechnik höher gewählt werden, als die Fördergeschwindigkeit des Ladehilfsmittels auf der zweiten Aufnahmeeinheit. Dadurch kann die Wechselzeit für die Umsetzung eines Ladehilfsmittels zwischen den Fördertechniken nochmals reduziert und die Durchsatzleistung an der Kommissionierstation erhöht werden.

Eine besonders kompakte Bauweise der Kommissionierstation wird auch erreicht, wenn die Ladehilfsmittel-Andienungsvorrichtung im Transportweg zwischen der ersten Fördertechnik und zweiten Fördertechnik stationär angeordnet ist und zu beiden Seiten des Transportweges jeweils zumindest ein Abstellelement für ein Ladehilfsmittel umfasst, welche Abstellelemente durch zumindest einen Stellantrieb zwischen einer Ausgangsposition, in welcher ein Ladehilfsmittel zwischen den Abstellelementen bewegbar ist, und einer Aufnahmeposition, in welcher ein Ladehilfsmittel auf den Abstellelementen an der Ladehilfsmittel-Andienungsvorrichtung andienbar ist, verstellbar sind.

Die Aufgabe der Erfindung wird auch durch die Merkmale des Anspruches 9 gelöst. Die kompakt aufgebaute Kommissionierstation lässt sich sehr einfach in einem Kommissioniersystem integrieren und sehr wirtschaftlich betreiben, da die Wechselzeit für die Umsetzung eines Ladehilfsmittels zwischen den Fördertechniken niedrig ist.

Sind die Kommissionierstationen in einer Reihe nebeneinander aufgestellt, wobei eine Kommissionierstation für Ziel-Ladehilfsmittel zwischen Kommissionierstationen für Quell-Ladehilfsmittel angeordnet ist, kann eine Kommissionierperson laufend bzw. nahezu unterbrechungsfrei mit Artikeln versorgt werden. Dadurch kann die Durchsatzleistung am Kommissioniersystem erhöht werden.

Sind dabei die Kommissionierstationen jeweils durch eine erste Fördertechnik, welche Ladehilfsmittel zur Kommissionierstation anfördert, an eine erste Förderumlaufbahn angeschlossen, können wiederum die Kommissionierstationen laufend bzw. nahezu unterbrechungsfrei mit Ladehilfsmittel versorgt werden. Dadurch kann die Durchsatzleistung am Kommissioniersystem erhöht werden.

Sind zudem die Kommissionierstationen jeweils durch eine zweite Fördertechnik, welche Ladehilfsmittel von der Kommissionierstation abfördert, an eine zweite Förderumlaufbahn angeschlossen, können teilweise oder vollständig entleerte Quell-Ladehilfsmittel oder "fertigkommissionierte" oder "teilkommissionierte" Ziel-Ladehilfsmittel sehr rasch wieder von den Kommissionierstationen abtransportiert werden. Dadurch kann die Durchsatzleistung am Kommissioniersystem erhöht werden.

Die Aufgabe der Erfindung wird durch die Merkmale des Anspruches 11 gelöst. Die kompakt aufgebauten Kommissionierstationen lassen sich sehr einfach in einem Kommissioniersystem innerhalb eines Lagersystems integrieren. Das Lagersystem kann sehr wirtschaftlich betreiben, da die Durchsatzleistung am Kommissioniersystem sehr hoch ist. Auch kann das erste Verteilsystem sowohl für den Antransport von Quell-Ladehilfsmittel als auch Ziel-Ladehilfsmittel verwendet werden.

Auch ist von Vorteil, wenn das automatisierte zweite Verteilsystem zum Transport von Quell-Ladehilfsmittel zu einer Rücklager-Fördertechnik und/oder Ziel-Ladehilfsmitteln zu Kommissionieraufträgen zwischen den Kommissionier-Arbeitsplätzen, an welchem über die zweiten Fördertechniken, welche Quell- und/oder Ziel-Ladehilfsmittel von der Kommissionierstation abfördern, die Kommissionierstationen der Kommissionier-Arbeitsplätze angeschlossen sind. Auch kann das zweite Verteilsystem sowohl für den Transport von Quell-Ladehilfsmittel als auch Ziel-Ladehilfsmittel verwendet werden.

Es ist eine vorteilhafte Maßnahme, wenn in einem ersten Bewegungszyklus zum Abtransport eines ersten Ladehilfsmittels von der Andienungsvorrichtung und zum Antransport eines zweiten Ladehilfsmittels zu der Andienungsvorrichtung die bewegungsgekoppelten Aufnahmeeinheiten in einer ersten Bewegungsrichtung zu Übergabepositionen (Transport der Ladehilfsmittel von unten nach oben) oder Übernahmepositionen (Transport der Ladehilfsmittel von oben nach unten) an der Fördertechnik und Andienungsvorrichtung bewegt werden.

Werden die Ladehilfsmittel von unten nach oben transportiert, ist es von Vorteil, wenn nach der Übergabe des ersten Ladehilfsmittels von der zweiten Aufnahmeeinheit auf die (obere) Fördertechnik und des zweiten Ladehilfsmittels von der ersten Aufnahmeeinheit an die Andienungsvorrichtung, in einem darauffolgenden zweiten Bewegungszyklus die bewegungsgekoppelten Aufnahmeeinheiten entgegen der ersten Bewegungsrichtung wieder in die Übernahmepositionen an der (unteren) Fördertechnik und Andienungsvorrichtung zurückbewegt werden.

Werden die Ladehilfsmittel von oben nach unten transportiert, ist es von Vorteil, wenn nach der Übergabe des ersten Ladehilfsmittels von der einen Aufnahmeeinheit auf die Andienungsvorrichtung und des zweiten Ladehilfsmittels von der anderen Aufnahmeeinheit auf die Fördertechnik, in einem darauffolgenden zweiten Bewegungszyklus die bewegungsgekoppelten Aufnahmeeinheiten entgegen der ersten Bewegungsrichtung wieder in die Übernahmepositionen an der Fördertechnik und Andienungsvorrichtung zurückbewegt werden.

Zum besseren Verständnis der Erfindung wird diese anhand der nachfolgenden Figuren näher erläutert.

Es zeigen jeweils in stark schematisch vereinfachter Darstellung:
- Fig. 1: ein Lagersystem mit Kommissionier-Arbeitsplätzen, in Draufsicht;
- Fig. 2: ein Kommissionier-Arbeitsplatz mit einem Kommissioniersystem, in perspektivischer Ansicht;
- Fig. 3: eine Kommissionierstation für das Kommissioniersystem nach Fig. 2, in perspektivischer Ansicht;
- Fig. 4 bis 8: eine Sequenzdarstellung für die Förderbewegung von Ladehilfsmittel, beispielweise Behältern, zwischen einer ersten Fördertechnik und zweiten Fördertechnik.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Im nachfolgenden wird die Erfindung im Zusammenhang mit Behältern beschrieben. Der Begriff "Behälter" ist nicht beschränkend anzusehen, sondern soll vielmehr als Beispiel für eine Vielzahl von möglichen Ladehilfsmitteln, wie beispielweise Tablar, Palette, Kartonage, usw. verstanden werden, die verwendet werden können, um Artikel bzw. Kommissioniergut zu lagern und zu transportieren.

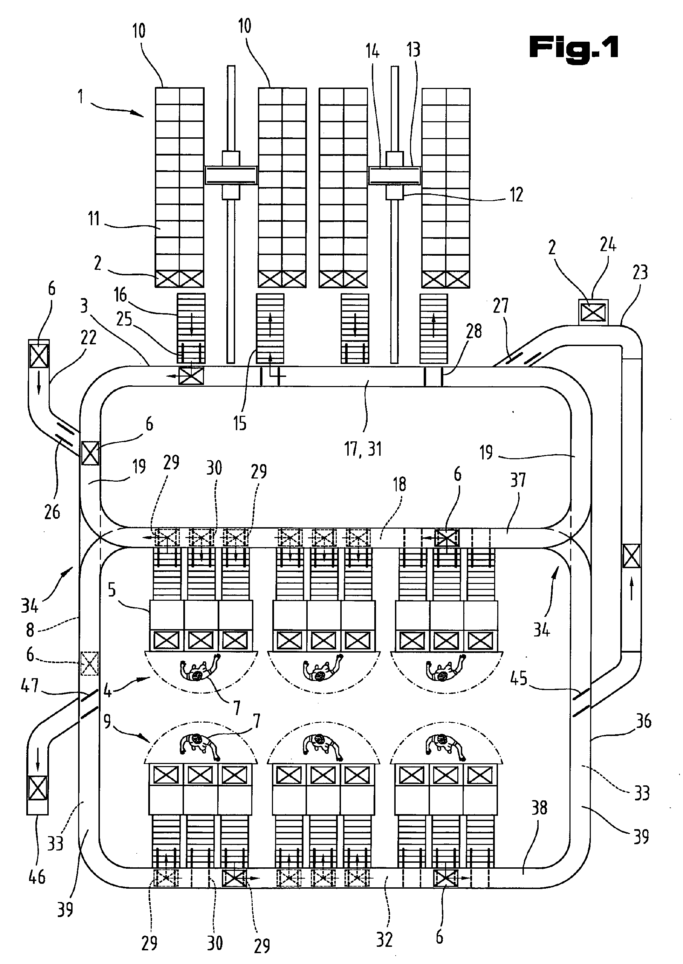

Das in Fig. 1 gezeigte Lagersystem umfasst ein Regallager 1 (Artikellager), eine automatisierte Fördertechnik zur Einlagerung von Quellbehältern 2 in das Regallager 1 bzw. Auslagerung von Quellbehältern 2 aus dem Regallager 1, ein automatisiertes erstes Verteilsystem 3, eine Vielzahl von Kommissionier-Arbeitsplätzen 4 mit jeweils einem Kommissioniersystem 5 zum Kommissionieren von Artikeln aus zumindest einem Quellbehälter 2 in zumindest einen Zielbehälter 6 durch eine Kommissionierperson 7. Die Anzahl der Kommissionier-Arbeitsplätze 4 kann abhängig vom Artikelsortiment und/oder Durchsatzleistung variieren.

Ist eine besonders hohe Durchsatzleistung bzw. Kommissionierleistung gefordert, so kann das Lagersystem ferner ein automatisiertes zweites Verteilsystem 8 und eine Vielzahl von Kommissionier-Arbeitsplätzen 9 mit jeweils einem Kommissioniersystem 5 zum Kommissionieren von Artikeln aus zumindest einem Quellbehälter 2 in zumindest einen Zielbehälter 6 durch eine Kommissionierperson 7. Die Kommissionier-Arbeitsplätze 9 sind bevorzugt identisch zu den Kommissionier-Arbeitsplätzen 4 ausgebildet.

Das Regallager 1 weist parallel angeordnete Lagerregale 10 auf, in denen in übereinander liegenden Regalebenen die Quellbehälter 2 auf einfach oder, wie gezeigt, doppelt tiefen Stellplätzen 11 gelagert sind. Zwischen den Lagerregalen 10 ist jeweils eine Regalgasse ausgebildet, in der zumindest ein rechnergesteuertes Regalförderfahrzeug 12 auf Schienen verfahrbar ist. Nach gezeigter Ausführung ist das Regalförderfahrzeug 12 mit einem Vertikalmast, einer am Vertikalmast heb- und senkbar gelagerten Plattform 13 und mit einer schematisch angedeuteten Lastaufnahmevorrichtung 14 ausgestattet, mittels welcher die Quellbehälter 2 einund ausgelagert werden können. Jedes Regalfahrzeug 12 bedient zwei gegenüberliegende Lagerregale 10.

Nach einer anderen (nicht gezeigten) Ausführung ist es auch möglich, dass das Regallager 1 in den Regalebenen jeweils an den Lagerregalen 10 befestigte und entlang der Regalgasse verlaufende Führungsschienen und in zumindest einigen der Regalebenen auf den Führungsschienen verfahrbare, autonome Einebenenregalbediengeräte (Shuttle) zum Transport der Quellbehälter 2 zu den Stellplätzen umfasst, wobei das Einebenenregalbediengerät mit der Lastaufnahmevorrichtung 14 ausgestattet, mittels welcher die Quellbehälter 2 ein- und ausgelagert werden können.

Die Regalgasse ist an ihrem stirnseitigen Ende mit einer Einlagerbahn 15 und Auslagerbahn 16 versehen, welche sich in der Verlängerung der Lagerregale 10 erstrecken. Auf der Einlagerbahn 15, beispielweise ein Rollenförderer, Bandförderer, und dgl., werden Quellbehälter 2 angeliefert und danach auf das Regalförderfahrzeug 12 übergeben. Die Übergabebewegung eines Quellbehälter 2 zwischen der Einlagerbahn 15 und der Plattform 13 kann durch die Lastaufnahmevorrichtung 14 oder durch eine vom Regalförderfahrzeug 12 getrennt ausgebildete (nicht dargestellte) Beladungsvorrichtung, beispielsweise ein Schieber, automatisch erfolgen.

Auf der Auslagerbahn 16, beispielweise ein Rollenförderer, Bandförderer, und dgl., werden Quellbehälter 2 ab gefördert, welche zuvor vom Regalförderfahrzeug 12 auf die Auslagerbahn 16 abgegeben werden. Die Übergabebewegung eines Quellbehälter 2 zwischen der Plattform 13 und der Auslagerbahn 16 kann durch die Lastaufnahmevorrichtung 14 oder durch eine vom Regalförderfahrzeug 12 getrennt ausgebildete (nicht dargestellte) Entladungsvorrichtung, beispielsweise ein Schieber, automatisch erfolgen.

Die automatisierte Fördertechnik zur Einlagerung von Quellbehältern 2 in das Regallager 1 bzw. Auslagerung von Quellbehältern 2 aus dem Regallager 1 umfasst demnach je Regalgasse zumindest ein Regalförderfahrzeug 12, die Einlagerbahn 15 und die Auslagerbahn 16. Das Regallager 1 kann dabei eine oder mehrere Regalgassen umfassen.

Die Kommissionier-Arbeitsplätze 4 sind über das automatisierte erste Verteilsystem 3 mit dem Regallager 1 verbunden. Das erste Verteilsystem 3 umfasst eine Förderumlaufbahn mit sich senkrecht zu den Regalgassen erstreckenden und in entgegengesetzte Richtungen transportierenden, geradlinigen Förderbahnabschnitten 17, 18 und diese endseitig verbindenden Förderbahnabschnitten 19. Die Förderumlaufbahn ist beispielsweise durch einen Rollenförderer, Bandförderer, Kettenförderer und dgl. gebildet.

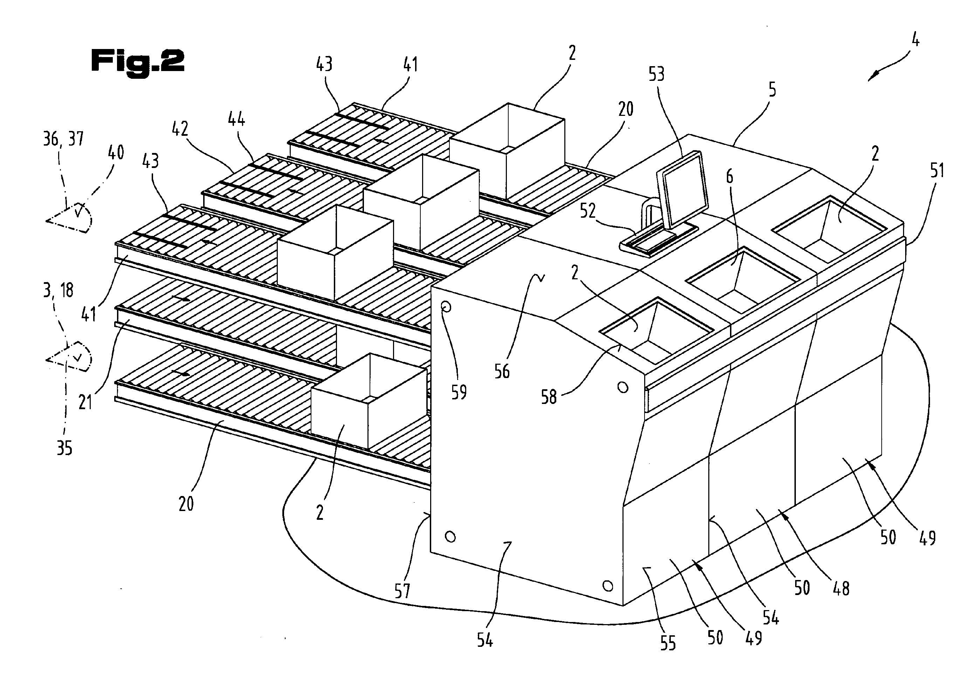

Die Einlager- und Auslagerbahnen 15, 16 sind an den ersten Förderbahnabschnitt 17 des Verteilsystems 3 angeschlossen. Die Kommissionier-Arbeitsplätzen 4 mit dem jeweiligen Kommissioniersystem 5 sind über eine erste Fördertechnik 20 (Fig. 2) für Quellbehälter 2 und erste Fördertechnik 21 (Fig. 2) für Zielbehälter 6 an das Verteilsystem 3, insbesondere den zweiten Förderbahnabschnitt 18 angeschlossen.

Wie in Fig. 1 schematisch eingetragen, kann an das Verteilsystem 3 ebenso eine automatisierte Bereitstellungsbahn 22 angeschlossen werden, mittels welcher leere Zielbehälter 6 bereitgestellt und zum Verteilsystem 3 gefördert werden. Auch kann an das erste Verteilsystem 3 eine automatisierte Rücklagerungsbahn 23 angeschlossen werden, mittels welcher Quellbehälter 2, die nach einem Kommissioniervorgang noch Artikel enthalten, zum ersten Verteilsystem 3 und von diesem zurück in das Regallager 2 gefördert werden können. Entleerte Quellbehälter 2, aus denen nach zumindest einem Kommissioniervorgang alle Artikel entnommen wurden, werden mittels der Rücklagerungsbahn 23 zu einer Sammelstation 24 gefördert. Entleere Quellbehälter 2 können auch als Zielbehälter 6 verwendet werden, wozu diese der Bereitstellungsbahn 22 zugeführt werden.

Auch ist es möglich, dass ein Zielbehälter 6 für einen Kommissionierauftrag an mehreren Kommissioniersystemen 5 mit unterschiedlichen Artikeln beladen werden muss und vom ersten Kommissioniersystem 5, wo eine "erste Teilkommissionierung" erfolgt, über das erste Verteilsystem 3 und gegebenenfalls zweite Verteilsystem 8 gefördert und zum zweiten Kommissioniersystem 5 ausgeschleust werden muss, wo eine "zweite Teilkommissionierung" erfolgt. Hierzu wird der "teilkommissionierte" Zielbehälter 6 von einem dritten Verteilsystem 36, wie es noch genauer beschrieben wird, über die Rücklagerungsbahn 23 auf das erste Verteilsystem 3 und gegebenenfalls danach auf das zweite Verteilsystem 8 gefördert.

Die für einen Kommissionierauftrag aus dem Regallager 1 benötigten Quellbehälter 2 können über eine Einschleusvorrichtung 25 zwischen der Auslagerbahn 16 und dem Verteilsystem 3 automatisch übergeben werden. Die Einschleusvorrichtung 25 ist beispielsweise durch einen Riemenumsetzer gebildet, welcher in der Auslagerbahn 16 endseitig integriert ist. Andererseits kann die Einschleusvorrichtung 25 auch durch einen mittels eines Stellantriebes betätigbaren Schieber gebildet sein.

Die für einen neuen Kommissionierauftrag benötigten leeren Zielbehälter 6 können über eine Einschleusvorrichtung 26 zwischen der Bereitstellungsbahn 22 und dem Verteilsystem 3 automatisch übergeben werden. Die Einschleusvorrichtung 26 ist beispielsweise durch einen Riemenumsetzer gebildet, welcher in der Bereitstellungsbahn 22 endseitig integriert ist.

Quellbehälter 2, welche nach einem Kommissioniervorgang an einem der Kommissionier-Arbeitsplätze 4; 9 nicht mehr benötigt werden und noch Artikel enthalten, können über eine Einschleusvorrichtung 27 zwischen der Rücklagerbahn 23 und dem Verteilsystem 3 automatisch übergeben werden. Die Einschleusvorrichtung 27 ist beispielsweise durch einen Riemenumsetzer gebildet, welcher in der Rücklagerbahn 23 endseitig integriert ist.

Noch teilweise befüllte Quellbehälter 2 werden über eine Ausschleusvorrichtung 28 zwischen dem Verteilsystem 3 und einer Einlagerbahn 15 automatisch übergeben. Die Ausschleusvorrichtung 28 ist beispielsweise durch einen Riemenumsetzer gebildet, welcher im dem Regallager 1 benachbarten Förderbahnabschnitt 17 integriert ist. Andererseits kann die Ausschleusvorrichtung 28 auch durch einen mittels eines Stellantriebes betätigbaren Schieber gebildet sein.

Die für einen Kommissionierauftrag benötigten und am ersten Verteilsystem 3 angeförderten Quellbehälter 2 werden am jeweiligen Kommissionier-Arbeitsplatz 4 bzw. an der jeweiligen Kommissionierstation 5 über eine Ausschleusvorrichtung 29 zwischen dem ersten Verteilsystem 3 und der ersten Fördertechnik 20 für Quellbehälter 2 automatisch übergeben werden.

Die für einen Kommissionierauftrag benötigten und am ersten Verteilsystem 3 angeförderten leeren Zielbehälter 6 werden am jeweiligen Kommissionier-Arbeitsplatz 4 bzw. an der jeweiligen Kommissionierstation 5 über eine Ausschleusvorrichtung 30 zwischen dem ersten Verteilsystem 3 und der ersten Fördertechnik 21 für Zielbehälter 6 automatisch übergeben werden.

Wie oben beschrieben, kann das Lagersystem ferner ein zweites Verteilsystem 8 umfassen, an welchem die Kommissionier-Arbeitsplätze 9 angeschlossen sind, und welches die Kommissionier-Arbeitsplätze 9 mit dem Regallager 1 verbindet. Das zweite Verteilsystem 8 umfasst eine Förderumlaufbahn mit sich senkrecht zu den Regalgassen erstreckenden und in entgegengesetzte Richtungen transportierenden, geradlinigen Förderbahnabschnitten 31, 32 und diese endseitig verbindenden Förderbahnabschnitten 33. Die Förderumlaufbahn ist beispielsweise durch einen Rollenförderer, Bandförderer, Kettenförderer und dgl. gebildet.

Die geradlinigen Förderbahnabschnitte 17, 31 der Verteilsysteme 3, 8 bilden dabei einen einzigen Förderbahnabschnitt. Die Förderbahnabschnitte 33 des zweiten Verteilsystems 8 erstrecken sich in der Verlängerung der Förderbahnabschnitte 19 des ersten Verteilsystems 3. Dabei kann über in den Kreuzungsbereichen der Verteilsysteme 3, 8 angeordnete, automatisiert steuerbare Förderweichen 34 die Zuteilung der Quellbehälter 2 und Auftragsbehälter 6 entweder auf die Förderumlaufbahn des Verteilsystems 3 oder die Förderumlaufbahn des Verteilsystems 8 erfolgen.

Die Kommissionier-Arbeitsplätze 9 mit dem jeweiligen Kommissioniersystem 5 sind wiederum über eine erste Fördertechnik 20 (Fig. 2) für Quellbehälter 2 und erste Fördertechnik 21 (Fig. 2) für Zielbehälter 6 an den zweiten Förderbahnabschnitt 32 angeschlossen.

Die für einen Kommissionierauftrag benötigten und am zweiten Verteilsystem 8 angeförderten Quellbehälter 2 werden am jeweiligen Kommissionier-Arbeitsplatz 9 bzw. an der jeweiligen Kommissionierstation 5 über eine Ausschleusvorrichtung 29 zwischen dem zweiten Verteilsystem 8 und der ersten Fördertechnik 20 für Quellbehälter 2 automatisch übergeben werden.

Die für einen Kommissionierauftrag benötigten und am zweiten Verteilsystem 8 angeförderten Zielbehälter 6 werden am jeweiligen Kommissionier-Arbeitsplatz 9 bzw. an der jeweiligen Kommissionierstation 5 über eine Ausschleusvorrichtung 30 zwischen dem zweiten Verteilsystem 8 und der ersten Fördertechnik 21 für Zielbehälter 6 automatisch übergeben werden.

Die zum Verteilen der Quell- und Zielbehälter 2, 6 auf die jeweiligen Kommissionier-Arbeitsplätze 4; 9 bzw. Kommissionierstation 5 vorgesehenen Ausschleusvorrichtungen 29, 30 sind beispielsweise durch einen Riemenumsetzer gebildet, welcher im dem Regallager 1 entfernten Förderbahnabschnitt 18, 32 integriert ist. Andererseits kann die Ausschleusvorrichtung 29, 30 auch durch einen mittels eines Stellantriebes betätigbaren Schieber gebildet sein, welcher der ersten Fördertechnik 20, 21 gegenüberliegt.

Das erste Verteilsystem 3 bildet eine erste (untere) Förderebene 35 (Fig. 2) aus, auf welcher die Quell- und/oder Zielbehälter 2, 6 gemäß den eingetragenen Pfeilen zu einer oder mehreren Kommissionierstationen 5 transportierbar sind. Ebenso bildet das zweite Verteilsystem 8, sofern dieses vorgesehen ist, eine erste (untere) Förderebene 35 (Fig. 2) aus, auf welcher die Quell- und7oder Zielbehälter 2, 6 in Förderrichtung gemäß den eingetragenen Pfeilen zu einer oder mehreren Kommissionierstationen 5 transportierbar sind.

Das in Fig. 1 gezeigte Lagersystem umfasst ferner ein automatisiertes drittes Verteilsystem 36, welches vorzugsweise oberhalb des ersten Verteilsystems 3 angeordnet ist und eine Förderumlaufbahn mit sich senkrecht zu den Regalgassen erstreckenden und in entgegengesetzte Richtungen transportierenden, geradlinigen Förderbahnabschnitten 37, 38 und diese endseitig verbindenden Förderbahnabschnitten 39 umfasst. Die Förderumlaufbahn ist beispielsweise durch einen Rollenförderer, Bandförderer, Kettenförderer und dgl. gebildet.

Das dritte Verteilsystem 36 bildet eine zweite (obere) Förderebene 40 (Fig. 2) aus, auf welcher die Quell- und/oder Zielbehälter 2, 6 von einer oder mehreren Kommissionierstationen 5 in Förderrichtung gemäß den eingetragenen Pfeilen vorzugsweise zum Regallager 1 abtransportierbar sind.

Die Kommissionier-Arbeitsplätze 4 sind mit dem jeweiligen Kommissioniersystem 5 über eine zweite Fördertechnik 41 (Fig. 2) für Quellbehälter 2 und zweite Fördertechnik 42 (Fig. 2) für Zielbehälter 6 an das Verteilsystem 36, insbesondere den ersten Förderbahnabschnitt 37 angeschlossen.

Die nach einem Kommissioniervorgang von der Kommissionierstation 5 abzufördernden (teilweise oder vollständig entleerten) Quellbehälter 2 können über eine Einschleusvorrichtung 43 zwischen der zweiten Fördertechnik 41 und dem Verteilsystem 36 automatisch übergeben werden.

Die nach einem Kommissioniervorgang von der Kommissionierstation 5 abzufordernden Zielbehälter 6 können über eine Einschleusvorrichtung 44 zwischen der zweiten Fördertechnik 42 und dem Verteilsystem 36 automatisch übergeben werden.

Die Einschleusvorrichtung 43, 44 ist beispielsweise durch einen Riemenumsetzer gebildet, welcher in der zweiten Fördertechnik 41, 42 endseitig integriert ist.

An das dritte Verteilsystem 36 ist die automatisierte Rücklagerungsbahn 23 angeschlossen, welche wiederum an das erste Verteilsystem 3 angeschlossen ist, sodass einerseits teilweise entleerte Quellbehälter 2 von der jeweiligen Kommissionierstation 5 zum ersten Verteilsystem 3 und von diesem in das Regallager 1 und andererseits vollständig entleerte Quellbehälter 2 von der jeweiligen Kommissionierstation 5 zur Sammelstation 24 rückgefördert werden können. Die Rücklagerungsbahn 23 weist zur Überbrückung des Niveauunterschiedes zwischen dem ersten und dritten Verteilsystem 3, 36 einen Gefällebahnabschnitt auf. Andererseits kann die Rücklagerungsbahn 23 auch durch einen Vertikallift gebildet sein, welcher die erste (untere) Förderebene 35 und zweite (obere) Förderebene 40 bzw. die Verteilsysteme 3, 36 miteinander verbindet.

Dabei werden die Quellbehälter 2 über eine Ausschleusvorrichtung 45 zwischen dem dritten Verteilsystem 36 und der Rücklagerungsbahn 23 automatisch übergeben.

An das dritte Verteilsystem 36 ist ferner eine automatisierte Förderbahn 46, insbesondere Pufferförderbahn angeschlossen, welche zu den Kommissionieraufträgen fertiggestellte Zielbehälter 6 abfördert. Die Förderbahn 46 kann zu einem (nicht dargestellten) Konsolidierungslager oder (nicht dargestellten) Warenausgang führen.

Dabei werden die Zielbehälter 6 über eine Ausschleusvorrichtung 47 zwischen dem dritten Verteilsystem 36 und der Förderbahn 46 automatisch übergeben.

Die Ausschleusvorrichtung 45, 47 ist beispielsweise durch einen Riemenumsetzer gebildet, welcher im Förderbahnabschnitt 39 integriert ist.

Die Kommissionier-Arbeitsplätze 9 mit dem jeweiligen Kommissioniersystem 5 sind wiederum auf gleiche Art und Weise wie die Kommissionier-Arbeitsplätze 4 über die zweite Fördertechnik 41 (Fig. 2) für Quellbehälter 2 und zweite Fördertechnik 42 (Fig. 2) für Zielbehälter 6 an das dritte Verteilsystem 36, insbesondere den zweiten Förderbahnabschnitt 32 angeschlossen.

In Fig. 2 ist eine beispielhafte Ausführung eines Kommissioniersystems 5 gezeigt, welche eine Kommissionierstation 48 für Zielbehälter 6 und beidseits zu dieser angeordnete Kommissionierstationen 49 für Quellbehälter 6 umfasst.

Die Kommissionierstationen 48, 49 umfassen jeweils einen Rahmen 50 und an einer Vorderseite eine Abstützleiste 51, an welcher sich die Kommissionierperson 7 während eines Kommissioniervorganges abstützen kann. Das Kommissioniersystem 5 umfasst zumindest eine Eingabeeinheit 52 und zumindest eine Ausgabeeinheit 53. Die Eingabeeinheit 52 ist beispielsweise eine Tastatur oder Quittiertaste, mit welcher das Ende eines Kommissioniervorganges bestätigt werden kann. Die Ausgabeeinheit 53 umfasst eine optische und/oder akustische Anzeige, beispielsweise einen Bildschirm, mit welcher die Anzahl der aus dem Quellbehälter 2 zu entnehmenden Artikel angezeigt werden kann.

Wie in Fig. 2 eingetragen, umfasst der Rahmen 50 Seitenwände 54 (erste Rahmenwandteile), eine Vorderwand 55 (zweiter Rahmenwandteil) und eine Deckwand 56 (dritter Rahmenwandteil). Die Seitenwände 54 (erste Rahmenwandteile), Vorderwand 55 (zweiter Rahmenwandteil) und Deckwand 56 (dritter Rahmenwandteil) bilden eine Umhausung (Gehäuse) für die noch näher zu beschreibenden Behälter-Transportvorrichtungen und BehälterAndienungsvorrichtung. Die Seitenwände 54 sind zu beiden Seiten der Fördertechniken 20, 21, 41, 42 angeordnet und verlaufen parallel zueinander. Die Vorderwand 55 verbindet die Seitenwände 54 auf einer der Fördertechniken 20, 21, 41, 42 gegenüberliegenden Vorderseite der Umhausung. Die in den übereinander liegenden Förderebenen 35, 40 angeordneten Fördertechniken 20, 21, 41, 42 erstrecken sich auf einer Rückseite der Umhausung zwischen den Seitenwänden 54 durch einen Öffnung 57 hindurch. Die Deckwand 56 verläuft oberhalb der zweiten Fördertechniken 41, 42 und verbindet die Seitenwände 54 an einer Oberseite der Umhausung.

Die Deckwand 56 ist mit einer fensterartigen Ausnehmung 58 versehen, über welche der Kommissionierperson 7 Zugang zu einem Quellbehälter 2 bzw. Zielbehälter 6 geschaffen wird, um Artikel aus dem Quellbehälter 2 zu entnehmen bzw. Artikel in dem Zielbehälter 6 abzulegen.

Die Kommissionierstation 48, 49 ist eine autarke Moduleinheit, welche mit einer weiteren Kommissionierstation 48, 49 zum Kommissioniersystem 5 beliebig kombiniert werden kann. Beispielsweise kann bloß eine Kommissionierstation 48 für Quellbehälter 2 und eine Kommissionierstation 49 für Zielbehälter 6 kombiniert werden. Andererseits kann die Kommissionierstation 49 für Quellbehälter 2 zwischen Kommissionierstationen 48 für Zielbehälter 6 angeordnet werden. Andererseits ist es aber auch möglich, dass ausschließlich eine oder mehrere Kommissionierstation(en) 49 für Quellbehälter 2 am Kommissionier-Arbeitsplatz 4; 9 vorgesehen ist(sind), und neben der Kommissionierstation 49 ein oder mehrere Pufferplätze vorgesehen ist(sind), an welchem(n) ein Ladehilfsmittel, wie eine Palette, bereitgestellt werden kann(können).

Die Kommissionierstationen 48, 49 können weisen jeweils am Rahmen 50, insbesondere den einander zugewandten Seitenwänden 54 miteinander in Eingriff bringbare mechanische Kupplungselemente 59 aufweisen.

Die Kommissionierstationen 48, 49 sind jeweils unabhängig voneinander steuerbar, sodass die Förderbewegungen der Quell- und Zielbehälter 2, 6 voneinander entkoppelt sind. Sind eine Kommissionierstation 48 und zwei Kommissionierstationen 49 vorgesehen, wie in Fig. 2 gezeigt, können zu unterschiedlichen Kommissionieraufträgen gleichzeitig Quellbehälter 2 und Zielbehälter 6 bereitgestellt werden können. So kann beispielsweise für einen ersten Kommissionierauftrag noch zumindest ein Artikel aus dem ersten Quellbehälter 2, welcher in der linken Kommissionierstation 49 bereitgestellt wurde, in den Zielbehälter 6 hineingelegt werden, während schon an der rechten Kommissionierstation 49 für einen zweiten Kommissionierauftrag ein zweiter Quellbehälter 2 bereitgestellt wird. Dadurch wird eine hohe Kommissionierleistung erreicht.

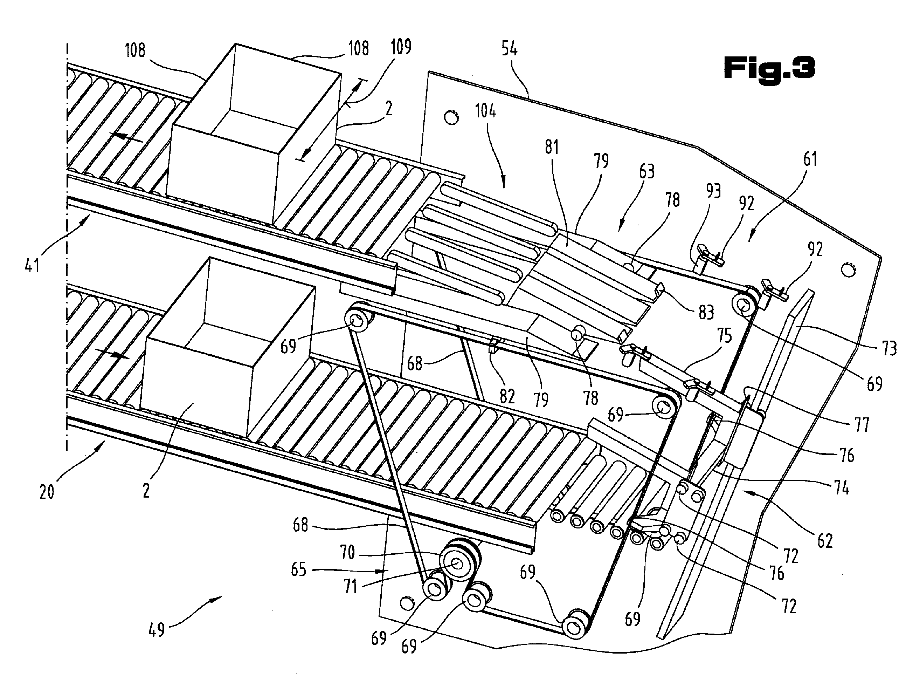

In der Fig. 3 ist beispielsweise eine Kommissionierstation 48 für Quellbehälter 2 mit aus Gründen der besseren Übersicht entfernter linken Seitenwand 54, Vorderwand 55 und Deckwand 56 dargestellt. Die nachfolgende Beschreibung der Kommissionierstation 48 für Quellbehälter 2 (Quell-Ladehilfsmittel) ist sinngemäß auf die Kommissionierstation 49 für Zielbehälter 6 (Ziel-Ladehilfsmittel) zu übertragen, wobei die Kommissionierstation 49 an die erste Fördertechnik 21 und zweite Fördertechnik 42 anschließt.

Die Kommissionierstation 48 zum Kommissionieren von Artikeln aus Quellbehältern 2 (Ladehilfsmitteln) durch eine Kommissionierperson 7 umfasst den Rahmen 50 bzw. das Gehäuse mit den Seitenwänden 54, der Vorderwand 55 und/oder der Deckwand 56, eine automatisierte Quellbehälter-Andienungsvorrichtung 61, eine automatisierte erste Quellbehälter-Transportvorrichtung zum Antransport von Quellbehältern 2 zu der Quellbehälter-Andienungsvorrichtung 61 und eine automatisierte zweite Quellbehälter-Transportvorrichtung zum Abtransport von Quellbehältern 2 von der Quellbehälter-Andienungsvorrichtung 61.

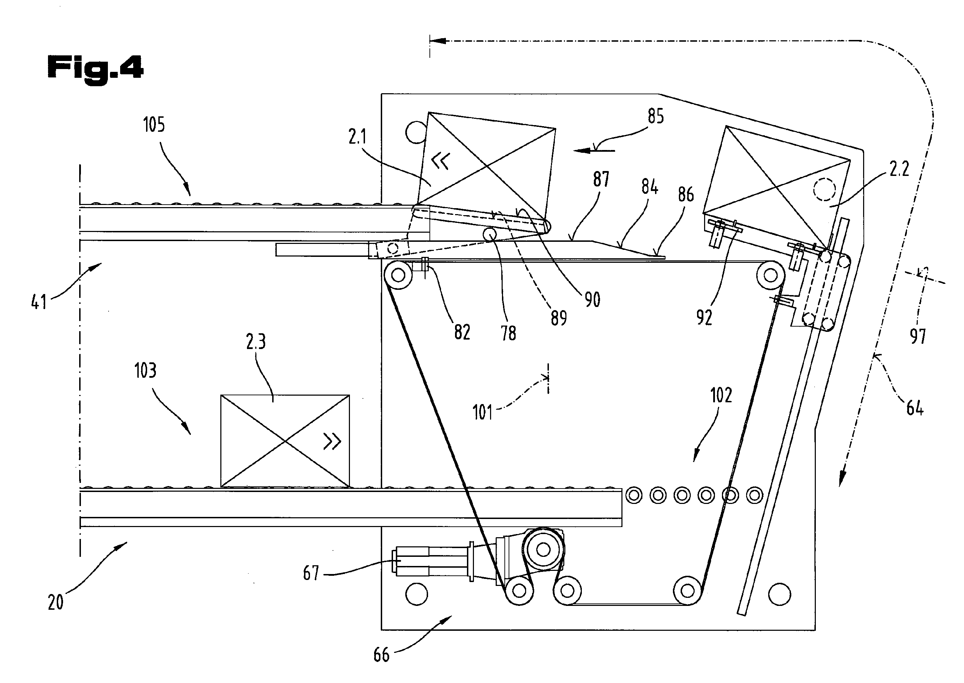

Die erste Quellbehälter-Transportvorrichtung ist durch eine erste Aufnahmeeinheit 62 für zumindest einen Quellbehälter 2 und die zweite Quellbehälter-Transportvorrichtung durch eine zweite Aufnahmeeinheit 63 für zumindest einen Quellbehälter 2 gebildet. Die zweite Aufnahmeeinheit 63 umfasst dabei eine im Wesentlich horizontal zwischen einer Übernahme- bzw. Übergabeposition 100 an der Andienungsvorrichtung 61 und einer Übergabe- bzw. Übernahmeposition 101 an der Fördertechnik 41, 42 verfahrbare Aufnahmeplattform 81 bzw. einen Aufnahmetisch. Der Quellbehälter 2 wird mittels der Transportvorrichtungen bzw. Aufnahmeeinheiten 62, 63 entlang eines Transportweges 64 zwischen der ersten Fördertechnik 20 und zweiten Fördertechnik 41 gefördert, wie in Fig. 4 in strichpunktierte Linien angedeutet.

Sowohl die erste Aufnahmeeinheit 62 als auch die zweite Aufnahmeeinheit 63 sind mit einem gemeinsamen, reversierbaren Positionierantrieb 65 gekoppelt. Der Positionierantrieb 65 umfasst nach gezeigter Ausführung eine Antriebsstation 66 mit einem einzigen, reversierbaren Antriebsmotor 67 (Fig. 4), insbesondere einen reversierbaren Elektromotor, und zu beiden Seiten des Transportweges 64 angeordnete und synchron antreibbare Zugmitteltriebe 68. Andererseits ist es auch möglich, dass je Zugmitteltrieb 68 ein Antriebsmotor 67 (nicht gezeigt) vorgesehen ist, wobei die Antriebsmotoren 67 elektrisch synchronisiert sind. Der Antriebsmotor 67 kann auch durch einen Fluidantrieb, Linearantrieb und dgl. gebildet werden. Natürlich kann auch nur ein einziger Zugmitteltrieb 68 verwendet werden, mit welchem die erste Aufnahmeeinheit 62 als auch die zweite Aufnahmeeinheit 63 verbunden sind.

Jeder Zugmitteltrieb 68 umfasst ein endlos umlaufendes Zugmittel, welches um Umlenkräder 69 und ein Antriebsrad 70 geführt ist. Die Antriebsräder 70 der Zugmitteltriebe 68 sind über eine Antriebswelle 71 an den gemeinsamen Antriebsmotor 67 gekuppelt. Genauso gut kann aber jedes Antriebsrad 70 mit einem Antriebsmotor 67 gekuppelt werden. Die Umlenk- und Antriebsräder 69, 70 sind am Rahmen 50 bzw. an den Seitenwänden 54 gelagert. Die Zugmittel sind beispielsweise durch einen Zahnriemen, eine Kette oder dgl. gebildet.

Die erste Aufnahmeeinheit 62 für einen Quellbehälter 2 ist über an dieser gelagerten Führungsorganen 72, vorzugsweise auf ortsfesten Führungsanordnungen 73 abgestützt. Die Führungsanordnungen 73 sind nach gezeigter Ausführung zu beiden Seiten der ersten Aufnahmeeinheit 62 angeordnet und erstrecken sich parallel zueinander zwischen der ersten Fördertechnik 20 und der Andienungsvorrichtung 61 über einen Längenabschnitt des Transportweges 64. Vorzugsweise sind die Führungsanordnungen 79 am Rahmen 50 bzw. an den Seitenwänden 54 befestigt.

Die erste Aufnahmeeinheit 62 umfasst einen Führungsrahmen 74 und eine an diesem vorkragende Aufnahmeplattform 75 für einen Quellbehälter 2, wobei der Führungsrahmen 74 mit dem einen oder den beiden Zugmitteltrieben 68 über ein Befestigungsmittel 76, beispielsweise Klemmverbindungen und dgl., in einem ersten Längsabschnitt des oder der Zugmitteltriebe(s) 68 bzw. Zugmittel(s) verbunden ist. Der Führungsrahmen 74 kann mit den Führungsorganen 72 versehen sein, welche auf der oder den ortsfesten Führungsanordnung(en) 73 abgestützt sind. Wie gezeigt, umfasst die Aufnahmeplattform 75 mit gegenseitigem Abstand parallel verlaufende Aufnahmegabeln, welche am Führungsrahmen 74 vorkragen. Die Aufnahmeplattform 75 bildet eine Aufnahmefläche für zumindest einen Quellbehälter 2 aus und ist mit an der Aufnahmefläche vorragenden Rückhalteelementen 77 versehen, gegen welche sich ein Quellbehälter 2 abstützten kann, wenn er auf der Aufnahmeplattform 75 auflastet. Bevorzugt ist die Aufnahmefläche gegenüber einer Horizontalebene und in Richtung der Kommissionierperson 7 hin um einen Winkel von bis zu 45°, beispielsweise 15°, nach unten geneigt. Die zweite Aufnahmeeinheit 63 für einen Quellbehälter 2 ist über an dieser gelagerte Führungsorgane 78, vorzugsweise auf ortsfesten Führungsanordnungen 79 abgestützt.

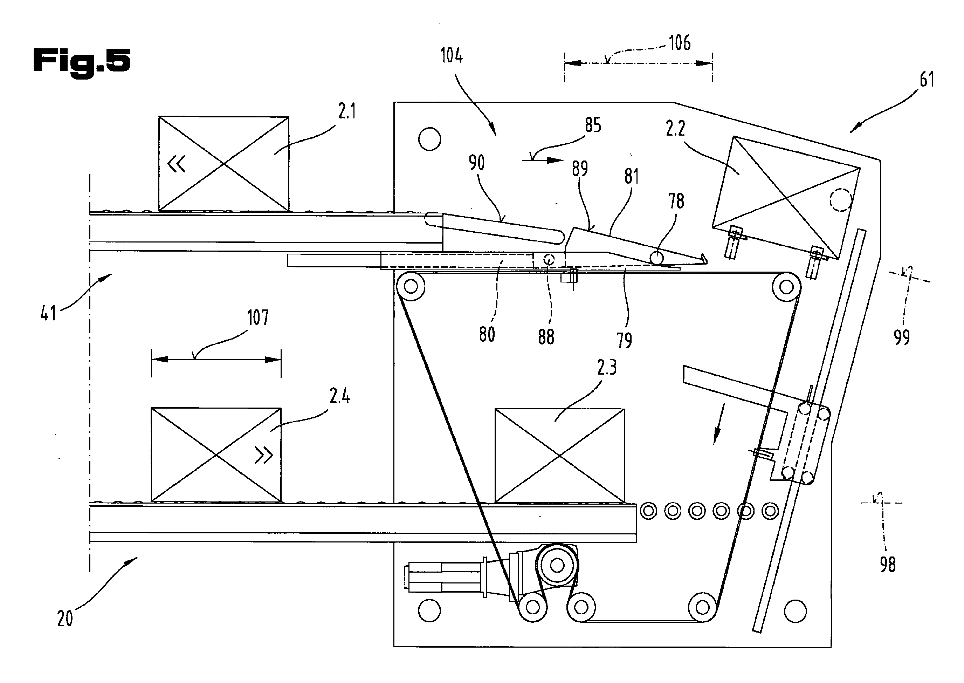

Die zweite Aufnahmeeinheit 63 umfasst einen Führungsrahmen 80 (Fig. 5) und eine mit diesem verbundene Aufnahmeplattform 81 für einen Quellbehälter 2, wobei der Führungsrahmen 80 mit dem einen oder den beiden Zugmitteltrieben 68 über ein Befestigungsmittel 82, beispielsweise Klemmverbindungen und dgl., in einem zweiten Längsabschnitt des oder der Zugmitteltriebe(s) 68 bzw. Zugmittel(s) verbunden ist. Der Führungsrahmen 80 kann mit den Führungsorganen 78 versehen sein, welche auf der oder den ortsfesten Führungsanordnung(en) 79 abgestützt sind. Die Aufnahmeplattform 81 bildet eine Aufnahmefläche für zumindest einen Quellbehälter 2 aus und ist mit an der Aufnahmefläche vorragenden Rückhalteelementen 83 versehen, gegen welche sich ein Quellbehälter abstützten kann, wenn er auf der Aufnahmeplattform 81 auflastet. Bevorzugt ist die Aufnahmefläche gegenüber einer Horizontalebene und in Richtung der Kommissionierperson 7 hin um einen Winkel von bis zu 45°, beispielsweise 15°, nach unten geneigt.

Die Führungsanordnungen 79 sind nach gezeigter Ausführung zu beiden Seiten der zweiten Aufnahmeeinheit 63 angeordnet und erstrecken sich parallel zueinander zwischen der zweiten Fördertechnik 41 und der Andienungsvorrichtung 61 über einen Längenabschnitt des Transportweges 64. Vorzugsweise sind die Führungsanordnungen 79 am Rahmen 50 bzw. an den Seitenwänden 54 befestigt.

Andererseits ist es auch möglich, wie nicht dargestellt, dass ausschließlich eine Führungsanordnung 79 zwischen den Zugmitteltrieben 68 vorgesehen ist, welche unterhalb der zweiten Aufnahmeeinheit 63 angeordnet ist und sich zwischen der zweiten Fördertechnik 41 und der Andienungsvorrichtung 61 über einen Längenabschnitt des Transportweges 64 erstreckt. In diesem Fall kann auch nur ein Führungsorgan 78 vorgehen werden, welches an der Führungsanordnung 79 abstützbar ist.

Wie in den Fig. ersichtlich, ist es von Vorteil, wenn die Führungsanordnung(en) 79 in einem Führungsabschnitt eine in Richtung der zweiten Fördertechnik 41 ansteigende Auffahrebene 84 bzw. Auffahrschräge(n) ausbildet(n). Die Steigung der Auffahrschräge 84 beträgt zwischen 5° und 30°. An den Führungsabschnitt können ein in einer der Bewegungsrichtungen 85 der zweiten Aufnahmeeinheit 63 vorgelagerter Führungsabschnitt und nachgelagerter Führungsabschnitt anschließen, welche jeweils eine im Wesentlichen horizontale Führungsebene 86, 87 ausbilden.

Die Aufnahmeplattform 81 ist nach einer bevorzugten Ausführung über eine Lagerachse 88 schwenkbar mit dem Führungsrahmen 80 verbunden bzw. um eine Lagerachse 88 gegenüber der(n) Führungsanordnung(en) 79 schwenkbar und mit den parallel zur Lagerachse 88 verlaufenden Drehachsen ausbildenden Führungsorganen 78, insbesondere Stützrädern versehen.

Gemäß dieser Ausbildung ist es möglich, dass die Aufnahmeplattform 81 auf der Stellbewegung entlang des Transportweges 64 zwischen der Andienungsvorrichtung 61 und der zweiten Fördertechnik 41 über die Führungsanordnung(en) 79 und das(die) Führungsorgan(e) 78 derart geführt, dass sich ein Auflagewinkel der Aufnahmefläche 89 relativ zu einer zweiten Förderebene 90 der zweiten Fördertechnik 41 verändern kann.

Befindet sich die Aufnahmeplattform 81 mit dem/den Führungsorgan(en) 78 in dem Führungsabschnitt der Führungsanordnung(en) 79, welcher eine geneigte Auffahrebene 84 ausbildet, so verlaufen die Aufnahmefläche 89 und Förderebene 90 im Wesentlichen planparallel, wie in Fig. 5 ersichtlich. Demnach schließen die Aufnahmefläche 89 und Förderebene 90 einen Winkel von im Wesentlichen 180° ein.

Befindet sich die Aufnahmeplattform 81 hingegen mit dem/den Führungsorgan(en) 78 in dem Führungsabschnitt der Führungsanordnung(en) 79, welche eine im Wesentlichen horizontale Führungsebene 87 ausbildet, so schließen die Aufnahmefläche 89 und Förderebene 90 einen Winkel von kleiner 180° ein, wie in Fig. 4 ersichtlich.

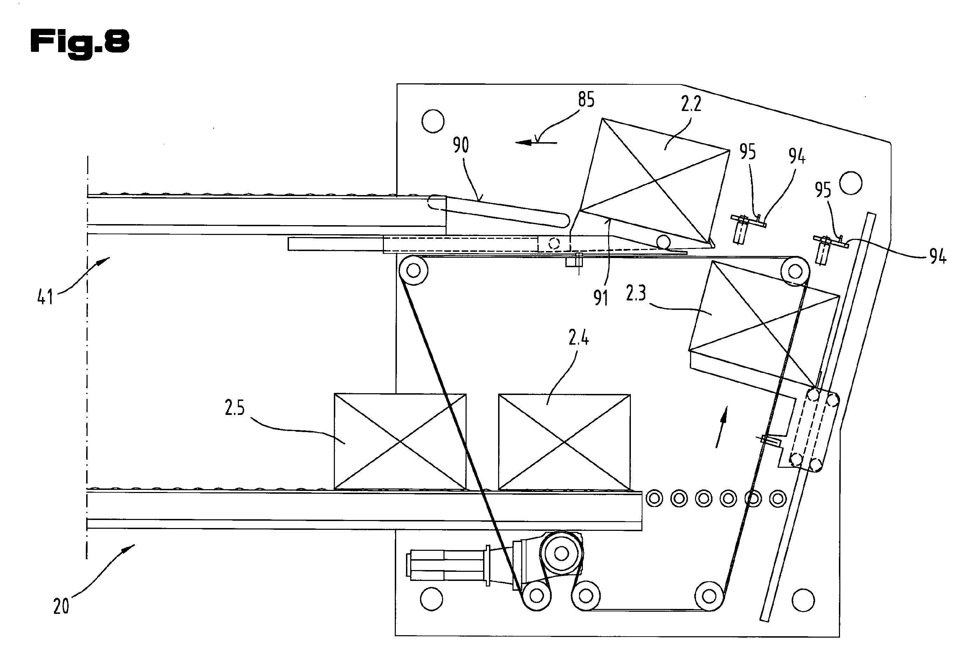

Mit anderen Worten wird der Quellbehälter 2 auf seiner Förderbewegung zwischen der Andienungsvorrichtung 61 und der zweiten Fördertechnik 41 in Bewegungsrichtung 85, wie in Fig. 8 dargestellt, noch vor der Übergabe von der zweiten Aufnahmeeinheit 63 auf die zweite Fördertechnik 41 in eine Übergabelage angekippt, in welcher eine Aufstandsfläche 91 des Quellbehälters 2 im Wesentlichen parallel zur Förderebene 90 verläuft.

Bei der Übergangsbewegung der Aufnahmeplattform 81 mit dem/den Führungsorgan(en) zwischen dem Förderabschnitt, in welchem eine geneigte Auffahrebene 84 ausgebildet ist, und dem Förderabschnitt, in welchem eine horizontale Führungsebene 87 ausgebildet ist, wird der Quellbehälter 2 aus der angekippten Übergabelage in eine Übernahmelage geringfügig rückgekippt, in welcher vorerst eine der zweiten Fördertechnik 41 zugewandte Vorderkante des Quellbehälters 2 (Ladehilfsmittel) die Förderebene 90 berührt. Durch die fortwährende Stellbewegung der Aufnahmeplattform 81 in Richtung der zweiten Fördertechnik 41, gelangt die Aufstandsfläche 91 des Quellbehälters 2 an der Förderebene 90 zur Auflage.

Dadurch kann auch bei sehr hoher Verstellgeschwindigkeit der zweiten Aufnahmeeinheit 63 bzw. Fördergeschwindigkeiten des Quellbehälters 2 eine geräuscharme Übergabe eines Quellbehälters 2 zwischen der zweiten Aufnahmeeinheit 63 und der zweiten Fördertechnik 41 erfolgen.

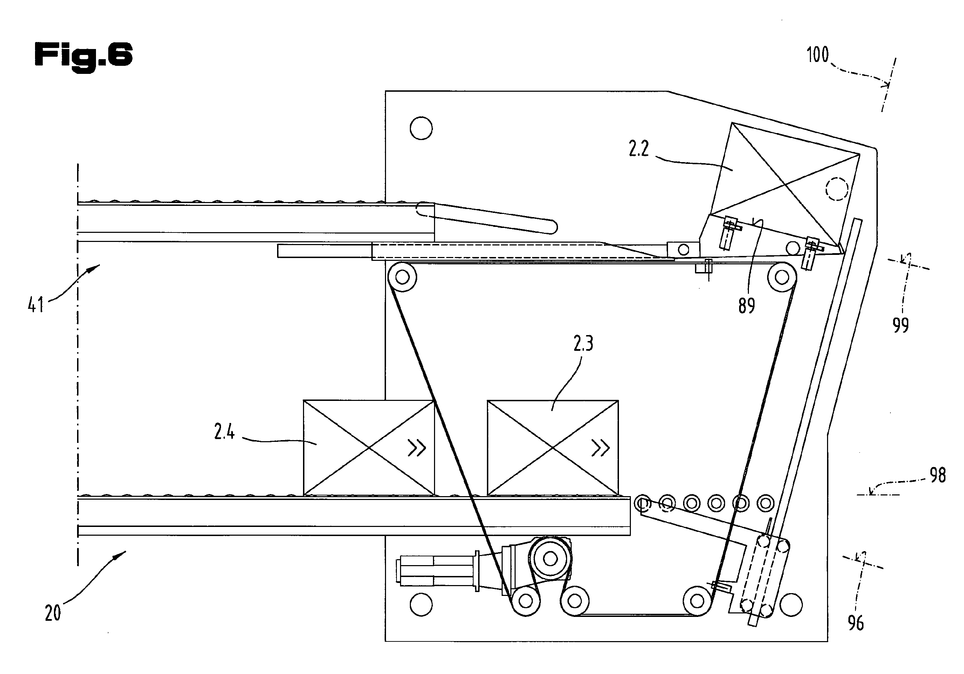

In Fig. 3 ist die stationäre Andienungsvorrichtung 61 für einen Quellbehälter 2 gezeigt, welche bevorzugt baulich getrennt von den Aufnahmeeinheiten 62, 63 ausgebildet ist. Diese ist entlang dem Transportweg 64 zwischen der ersten Fördertechnik 20 und zweiten Fördertechnik 41 angeordnet und umfasst zu beiden Seiten des Transportweges 64 zumindest ein Abstellelement 92 für einen Quellbehälter 2. Die Abstellelemente 92 sind durch Stellantriebe 93 zwischen einer Ausgangsposition (Fig. 3, 4, 7, 8) und einer Aufnahmeposition (Fig. 5, 6) verstellbar. Die Abstellelemente 92 bzw. Stellantriebe 93 sind am Rahmen 50, insbesondere den Seitenwänden 54 gelagert.

Nach gezeigter Ausführung sind zu beiden Seiten des Transportweges 64 jeweils zwei linke Abstellelemente 92 und zwei rechte Abstellelemente 92 vorgesehen. Jedes Abstellelement 92 ist mit einem Stellantrieb 93 gekoppelt. Es ist aber auch möglich, dass die linken Abstellelemente 92 mit einem einzigen Stellantrieb 93 und die rechten Abstellelemente 92 mit einem einzigen Stellantrieb 93 gekoppelt sind. Auch können die linken und rechten Abstellelemente 92 mit nur einem einzigen Stellantrieb 93 gekoppelt werden. Die mechanische Koppelung zwischen den Schwenkachsen der Abstellelemente 92 kann beispielweise durch ein Zugmittel, wie Zahnriemen und dgl., oder Gelenkstangen erfolgen. Der/die Stellantrieb(e) 93 sind beispielsweise durch reversierbare, elektrische oder fluidische Schwenkantriebe gebildet.

Die Antriebsstation 66, insbesondere der/die Antriebsmotor(en) 67 und der/die Stellantrieb(e) 92 sind mit einer Steuereinheit (nicht dargestellt) verbunden, welche ihrerseits die Bewegungsabläufe der Aufnahmeeinheiten 62, 63 und Abstellelemente 62 derart steuert, dass eine Kollision zwischen einem ersten Quellbehälter 2, welcher von der ersten Fördertechnik 20 in Richtung zur Andienungsvorrichtung 61 bewegt wird, und einem zweiten Quellbehälter 2, welcher von der Andienungsvorrichtung 61 in Richtung zur zweiten Fördertechnik 20 bewegt wird, vermieden wird, wie dies aus Fig. 8 ersichtlich ist.

In der Ausgangsposition der Abstellelemente 92 (Fig. 3, 4, 7, 8) kann ein Quellbehälter 2 an den Abstellelementen 92 vorbeibewegt werden, während in der Aufnahmeposition (Fig. 5, 6) ein Quellbehälter 2 auf den Abstellelementen 92 absetzbar ist. In der Aufnahmeposition befindet sich ein Quellbehälter 2 in einer Andienungsposition, daher in einer für die Kommissionierperson 7 geeigneten Entnahmeposition für Artikel. In der Aufnahmeposition befindet sich ein Zielbehälter 6 in einer Andienungsposition, daher in einer für die Kommissionierperson 7 geeigneten Beladeposition, in welcher die aus dem Quellbehälter 2 entnommenen Artikel in den Zielbehälter 6 gelegt werden können.

Die Abstellelemente 92 umfassen jeweils eine Abstellzunge 94 und ein an dieser im Wesentlichen senkrecht vorragendes Positionierelement 95, wie in Fig. 8 eingetragen. In der Andienungsposition des Quellbehälters 2 bzw. Auftragsbehälters 6 ist dieser zwischen den Positionierelementen 95 der jeweils in die Aufnahmeposition bewegten Abstellelemente 92 zentriert und lastet auf den Abstellzungen 94 auf.

Die Abstellelemente 92 sind beispielsweise Winkelhebel, welche jeweils um eine Schwenkachse um einen Stellwinkel von bevorzugt 90° hin- und her drehbar sind und jeweils in einem dem Transportweg 64 benachbarten Hebelabschnitt die Abstellzunge 94 ausbilden.

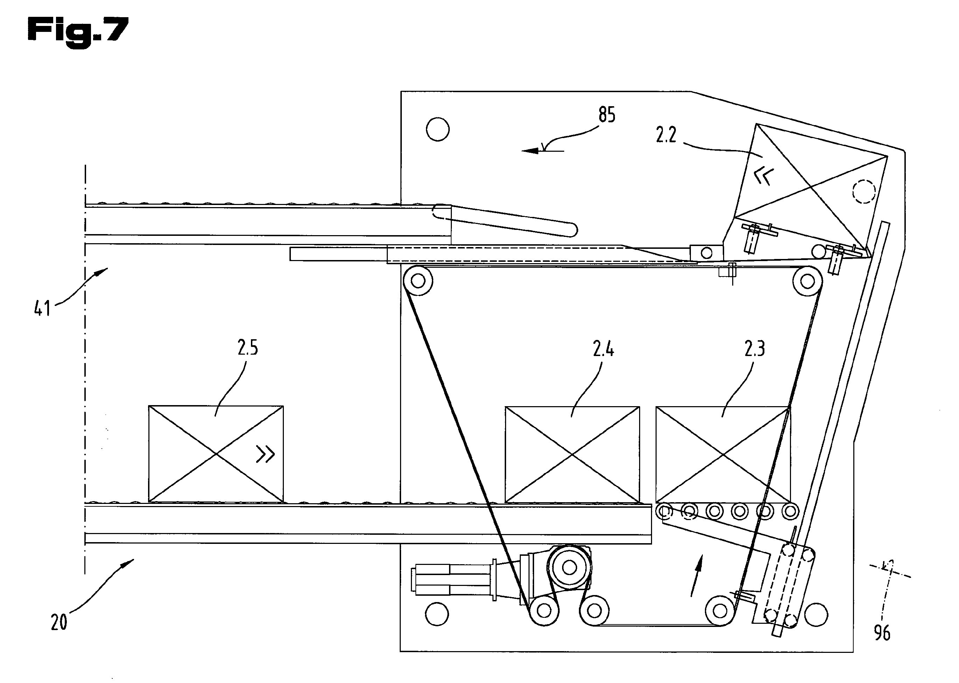

Wie aus den Fig. 4 bis 8 ersichtlich, ist die erste Aufnahmeeinheit 62 für einen ersten Quellbehälter 2 und die zweite Aufnahmeeinheit 63 für einen zweiten Quellbehälter 2 über den einzigen Positionierantrieb 65 bewegungsgekoppelt und vollziehen beide gleichzeitig eine gleichsinnige Verstellbewegung entweder in eine erste Bewegungsrichtung 85 im Uhrzeigersinn (Fig. 5) oder in eine zweite Bewegungsrichtung 85 entgegen dem Uhrzeigersinn (Fig. 7).

Dabei kann die erste Aufnahmeeinheit 62 mit dem Positionierantrieb 65 zwischen einer Übernahmeposition 96 (Fig. 6, 7) an ersten Fördertechnik 20 und einer Übergabeposition 97 (Fig. 4) an der Andienungsvorrichtung 61 verstellt werden. Die Übernahmeposition 96 liegt auf einem ersten Höhenniveau unterhalb einer ersten Förderebene 98 der ersten Fördertechnik 20. Die Übergabeposition 97 liegt auf einem zweiten Höhenniveau knapp oberhalb einer Andienungsposition 99 (Fig. 5) bzw. Andienungsebene für einen Quellbehälter 2, um eine ungehinderte Verstellung der Abstellelement 92 zuzulassen. Die Übergabeposition 97 liegt oberhalb der Übernahmeposition 96. Gegebenenfalls kann die Übergabeposition 97 und Andienungsposition 99 bezüglich eines Höhenniveaus übereinstimmen. Bevorzugt ist die Andienungsebene gegenüber einer Horizontalebene und in Richtung der Kommissionierperson 7 hin um einen Winkel von bis zu 45°, beispielsweise 15°, nach unten geneigt, sodass eine besonders ergonomische Kommissionierung für die Kommissionierperson 7 möglich ist.

Dabei kann die zweite Aufnahmeeinheit 63 mit dem Positionierantrieb 65 zwischen einer Übernahmeposition 100 (Fig. 6) an der Andienungsvorrichtung 61 und einer Übergabeposition 101 (Fig. 4) an der zweiten Fördertechnik 41 verstellt werden. Die Übernahmeposition 100 und Übergabeposition 101 liegen im Wesentlich auf demselben Höhenniveau oberhalb der ersten Fördertechnik 20. In der Übernahmeposition 100 ist die Aufnahmefläche 89 an der zweiten Aufnahmeeinheit 63 oberhalb der Andienungsposition 99 bzw. Andienungsebene für einen Quellbehälter 2. Gegebenenfalls kann in der Übernahmeposition 100 die Aufnahmefläche 89 und Andienungsebene bezüglich eines Höhenniveaus übereinstimmen. In der Übergabeposition 101 ist die Aufnahmefläche 89 an der zweiten Fördertechnik 41 unterhalb zweiten Förderebene 90, wie in Fig. 4 ersichtlich. Dadurch kann ein Quellbehälter 2, wenn er auf die zweite Fördertechnik 41 übergeben wurde, mit sehr hoher Fördergeschwindigkeit unabhängig von der Verstellbewegung der zweiten Aufnahmeeinheit 63 bewegt werden. Demnach ist eine Entkoppelung der Förderbewegung eines Quellbehälters 2 und der Verstellbewegung der zweiten Aufnahmeeinheit 63 zur neuerlichen Bewegung in die Übernahmeposition 100 möglich.

Nachdem die erste Aufnahmeeinheit 62 ausschließlich eine Vertikalbewegung und die zweite Aufnahmeeinheit 63 ausschließlich eine Horizontalbewegung durchführen, ist ein besonders schneller Behälterwechsel zwischen der ersten Fördertechnik 20 und zweiten Fördertechnik 41 möglich. Eine Entkoppelung der Verstellbewegungen wird durch die Andienungsvorrichtung 61 ermöglicht.

Wie in den Fig. ersichtlich, umfasst die erste Fördertechnik 20, 21 in einem der Andienungsvorrichtung 61 zugewandten ersten Förderabschnitt eine Übergabevorrichtung 102 und in einem der Andienungsvorrichtung 61 abgewandten zweiten Förderabschnitt eine Fördervorrichtung 103. Die angetriebene Fördervorrichtung 103 umfasst Förderelemente und dient als Pufferbahn, insbesondere Horizontalpufferbahn mit Pufferspeicherplätzen für eine Vielzahl von Quellbehältern 2 bzw. Zielbehältern 6. Die Fördervorrichtung kann hierzu eine Staufunktion ermöglichen. Die Übergabevorrichtung 102 bildet einen Stellplatz für einen Quellbehälter 2 bzw. Auftragsbehälter 6 aus und umfasst zumindest ein vorzugsweise angetriebenes Förderelement. Nach gezeigter Ausführung sind die Förderelemente sowohl der Übergabevorrichtung 102 als auch die Fördervorrichtung 103 durch eine Rollenbahn gebildet. Wie in Fig. 3 ersichtlich, ist eine Breite des Förderelementes der Übergabevorrichtung 102 derart gewählt, dass die Aufnahmegabeln der Aufnahmeplattform 75 an gegenüberliegenden Längsseiten der Übergabevorrichtung 102 vorbei bewegt werden können. Die Übergabevorrichtung 102 und Fördervorrichtung 103 bilden die horizontale erste Förderebene 98 aus. Die erste Förderebene 35 des Verteilsystems 3; 8 und die erste Förderebene 98 liegen vorzugsweise in einer Horizontalebene.

Wie in den Fig. ersichtlich, umfasst die zweite Fördertechnik 41, 42 in einem der Andienungsvorrichtung 61 zugewandten ersten Förderabschnitt eine Übergabevorrichtung 104 und in einem der Andienungsvorrichtung 61 abgewandten zweiten Förderabschnitt eine Fördervorrichtung 105. Die angetriebene Fördervorrichtung 105 umfasst Förderelemente und kann als Pufferbahn, insbesondere Horizontalpufferbahn mit Pufferspeicherplätzen für eine Vielzahl von Quellbehältern 2 bzw. Zielbehältern 6 dienen. Die Fördervorrichtung kann hierzu eine Staufunktion ermöglichen. Die Übergabevorrichtung 104 bildet einen Stellplatz für einen Quellbehälter 2 bzw. Auftragsbehälter 6 aus und umfasst zumindest ein angetriebenes Förderelement. Nach gezeigter Ausführung sind die Förderelemente der Fördervorrichtung 105 durch eine Rollenbahn gebildet. Die Förderelemente der Übergabevorrichtung 104 sind durch in Richtung der Förderbewegung des Quellbehälters 2 bzw. Zielbehälters 6 parallel verlaufende Förderriemen gebildet.

Die Übergabevorrichtung 104 erstreckt sich entlang dem Transportweg 64 in Richtung der Andienungsvorrichtung 61 und bildet die in Richtung der Andienungsvorrichtung 61 geneigt nach unten verlaufende Förderebene 90 aus. Bevorzugt ist die Förderebene 90 gegenüber einer Horizontalebene um einen Winkel von bis zu 30° geneigt. Eine kurze Verstellbewegung der zweiten Aufnahmeeinheit 63 und damit kurze Behälterwechselzeiten werden erreicht, wenn der in Fig. 5 eingetragene Längsabstand 106 zwischen einander zugewandten Grenzkanten an der Übergabevorrichtung 104 und an der Andienungsvorrichtung 61 etwa der Längsabmessung 107 eines Quellbehälters 2 bzw. Zielbehälters 6 beträgt. Die Fördervorrichtung 105 bildet eine horizontale Förderebene aus, welche mit der zweiten Förderebene 40 des Verteilsystems 36 in einer Horizontalebene liegt.

Wie in den Fig. 4 bis 8 gezeigt, werden die Quellbehälter 2 bzw. Zielbehälter 6 bevorzugt von unten, auf der ersten Förderebene 35, 98 angefördert, über die erste Aufnahmeeinheit 62 auf das Höhenniveau der Andienungsvorrichtung 61 oberhalb der ersten Fördertechnik 20, 21 bewegt und nach einem abgeschlossenen Kommissioniervorgang über die zweite Aufnahmeeinheit 62 von der Andienungsvorrichtung 61 übernommen und von dieser zur zweiten Fördertechnik 41, 42 gefördert. Diese bevorzugte Förderrichtung ermöglicht eine Förderbewegung des Quellbehälters 2 bzw. Zielbehälters 6 im Wesentlichen senkrecht zu die Ausnehmung 58 umgrenzenden Deckwandabschnitte der Deckwand 56, sodass die am Boden eines Quellbehälters 2 bzw. Zielbehälters 6 (Ladehilfsmittel) vorragenden Seitenwände 108 (Fig. 3) mit ihren Stirnkanten von unten in Richtung auf die Deckwandabschnitte zugestellt werden können. Die Ausnehmung 58 kann mit einer ersten Längsabmessung (Breite) und zweiten Längsabmessung (Länge) ausgebildet, welche geringfügig kleiner ausgebildet sind, als eine erste Längsabmessung 107 (Breite) und zweite Längsabmessung 109 (Länge), sodass die Seitenwände 108 die Ausnehmung 58 umgrenzen. Andererseits kann die Ausnehmung 58 mit einer ersten Längsabmessung (Breite) und zweiten Längsabmessung (Länge) ausgebildet werden, welche geringfügig größer ausgebildet sind, als eine erste Längsabmessung 107 (Breite) und zweite Längsabmessung 109 (Länge), sodass die Seitenwände 108 in die Ausnehmung 58 vorragen.

Andererseits ist es aber auch möglich, dass die Förderrichtung umgekehrt wird. Dabei werden die Quellbehälter 2 bzw. Zielbehälter 6 von oben, auf der zweiten Förderebene 40, 90 angefördert, über die zweite Aufnahmeeinheit 63 von der zweiten Fördertechnik 41, 42 übernommen und zur Andienungsvorrichtung 61 gefördert. Nach einem abgeschlossenen Kommissioniervorgang wird der Quellbehälter 2 bzw. Zielbehälter 6 über die auf das Höhenniveau der Andienungsvorrichtung 61 verstellte erste Aufnahmeeinheit 62 übernommen und auf die erste Fördertechnik 20, 21 gefördert. Dementsprechend werden die Quellbehälter 2 bzw. Zielbehälter 6 auf dem dritten Verteilsystem 36 zu den Kommissioniersystemen 5 angefördert und auf dem ersten Verteilsystem 3 und gegebenenfalls zweiten Verteilsystem 8 von den Kommissioniersystemen 5 wieder abgefördert. Nach dieser Maßnahme kann eine Kommissionierperson 7 auch aus größerem Abstand zur Kommissionierstation 48, 49 auf den Inhalt des Quellbehälters 2 einsehen und sich schon sehr bald auf den Kommissioniervorgang vorbereiten.

Im Nachfolgenden wird das Verfahren zum Kommissionieren von Artikeln aus Quellbehältern 2 in Zielbehälter 6 anhand der Fig. 1, 2, 4 bis 8 beschrieben.

Wurde ein Kommissionierauftrag an einem Rechnersystem elektronisch erfasst, wird zumindest ein Quellbehälter 2 zu diesem Kommissionierauftrag aus dem Regallager 1 über die automatisierte Fördertechnik 12, 16 ausgelagert und auf das erste Verteilsystem 3 und gegebenenfalls von diesem auf das zweite Verteilsystem 8 übergeben. Der Quellbehälter 2 wird am Verteilsystem 3, 8 zu einem der Kommissionier-Arbeitsplätze 4; 9 angefördert und vom Verteilsystem 3, 8 mittels einer der Ausschleusvorrichtungen 29 auf die erste Fördertechnik 20 ausgeschleust. Die Ausschleusvorrichtungen 29 und das Verteilsystem 3, 8 sind hierzu an die Steuereinheit angeschlossen, die ihrerseits die Zuteilung auf die Kommissioniersysteme 5 koordiniert.

Ebenso wird zu diesem Kommissionierauftrag zumindest ein Zielbehälter 6 zu dem Kommissioniersystem 5, an welchem der Quellbehälter 2 bereitgestellt wird, an gefördert. Es kann entweder ein leerer Zielbehälter 6 von der Bereitstellungsbahn 22 über das erste Verteilsystem 3 und gegebenenfalls das zweite Verteilsystem 8 zu einem der Kommissionier-Arbeitsplätze 4; 9 angefördert und vom Verteilsystem 3, 8 mittels einer der Ausschleusvorrichtungen 30 auf die erste Fördertechnik 21 ausgeschleust werden. Andererseits kann der Zielbehälter 6 bereits Artikel enthalten. Dies ist der Fall, wenn der Zielbehälter 6 an einem ersten Kommissioniersystem 5 nur "teilkommissioniert" werden konnte. Sodann wird der "teilkommissionierte" Zielbehälter 6 von seiner Andienungsposition 99 an der Andienungsvorrichtung 61 über die zweite Aufnahmeeinheit 63 zur zweiten Fördertechnik 42 gefördert und von dieser mittels der Einschleusvorrichtung 44 auf das dritte Verteilsystem 36 ausgeschleust. Dort angekommen, wird der "teilkommissionierte" Zielbehälter 6 vom dritten Verteilsystem 36 abgefördert und mittels der Ausschleusvorrichtung 45 auf die Rücklagerbahn 23 eingeschleust. Danach wird der "teilkommissionierte" Zielbehälter 6 wiederum mittels der Einschleusvorrichtung 27 auf das Verteilsystem 3 ausgeschleust und vom ersten Verteilsystem 3 und gegebenenfalls dem zweiten Verteilsystem 8 zu einem der Kommissionier-Arbeitsplätze 4; 9 angefördert und vom Verteilsystem 3, 8 mittels einer der Ausschleusvorrichtungen 30 auf die erste Fördertechnik 21 eines zweiten Kommissioniersystems 5 ausgeschleust werden. Im zweiten Kommissioniersystem 5 werden dann die zu diesem Kommissionierauftrag noch benötigten Artikel, welche zuvor über einen Quellbehälter 2 bereitgestellt wurden, in den "teilkommissionierten" Zielbehälter 6 abgelegt. Der Zielbehälter 6 kann nun alle zu diesem Kommissionierauftrag benötigten, unterschiedlichen Artikeln enthalten oder wird er für einen weiteren Kommissioniervorgang zu einem anderen Kommissioniersystem 5 gefördert.

Kann der Zielbehälter 6 an einem einzigen Kommissioniersystem 5 mit all den zu diesem Kommissionierauftrag benötigten Artikeln befüllt werden, wird der "fertigkommissionierte" Zielbehälter 6 von der zweiten Fördertechnik 42 mittels der Einschleusvorrichtung 44 auf das dritte Verteilsystem 36 ausgeschleust und von diesem zur Förderbahn 46 gefördert, wo er mittels der Ausschleusvorrichtung 47 auf die Förderbahn 46 eingeschleust wird.

Der Quellbehälter 2 wird aus dem Regallager 1 zum ausgewählten Kommissionier-Arbeitsplatz 4; 9 zeitlich derart transportiert, dass der Zielbehälter 6 und Quellbehälter 2 am Kommissionier-Arbeitsplatz 4; 9 in etwa gleichzeitig ankommen.

Für den Kommissioniervorgang wird der Kommissionierperson 7 an der Ausgabeeinheit 53 (Fig. 2) die Entnahmemenge angezeigt und von dieser die entsprechende Menge an Artikeln in den Zielbehälter 6 kommissioniert. Das Ende des Kommissioniervorganges wird durch die Kommissionierperson 7 an der Eingabeeinheit 52 (Fig. 2) quittiert.

Die Förderbewegung der Quellbehälter 2 wird nun genauer anhand der Fig. 4 bis 8 beschrieben. Wie bereits oben beschrieben, kann die Förderbewegung auch umgekehrt werden, wird aber nachfolgend auf eine bevorzugte Förderbewegung der Quellbehälter 2 von unten nach oben Bezug genommen. Gleiches gilt für den Auftragsbehälter 6.

Wie in Fig. 4 ersichtlich, befindet sich die zweite Aufnahmeeinheit 63 in der Übergabeposition 101, in welcher ein erster Quellbehälter 2.1 bereits auf die zweite Fördertechnik 20 übergeben wurde. Die erste Aufnahmeeinheit 62 befindet sich in der Übergabeposition 97, in welcher ein zweiter Quellbehälter 2.2 auf die noch in die Aufnahmeposition (Fig. 5, 6) zu verstellenden Abstellelemente 92 übergeben wird. Ein dritter Quellbehälter 2.3 wird bereits wieder auf der ersten Fördertechnik 20 zur Kommissionierstation 5 angefördert.

Wird nun die erste Aufnahmeeinheit 62 und zweite Aufnahmeeinheit 63 über den gemeinsamen Positionierantrieb 65 aus ihren Übergabepositionen 97, 101 in Bewegungsrichtung 85 in ihre Übernahmepositionen 96, 100 verstellt, wie in Fig. 5 dargestellt, wird der zweite Quellbehälter 2.2 auf die bereits in die Aufnahmeposition verstellten Abstellelemente 92 abgesetzt. Währenddessen wird der erste Quellbehälter 2.1 auf der zweiten Fördertechnik 41 abgefördert, der dritte Quellbehälter 2.3 am vorderen Ende der ersten Fördertechnik 20 bereitgestellt und ein vierter Quellbehälter 2.4 auf der ersten Fördertechnik 20 zur Kommissionierstation 5 angefördert. Der zweite Quellbehälter 2.2 befindet sich nach dem Absetzen auf den Abstellelementen 92 in seiner Andienungsposition 99 an der Andienungsvorrichtung 61, in welcher aus dem Quellbehälter 2.2 gemäß einem Kommissionierauftrag Artikel entnommen und in einem an der Kommissionierstation 48 bereitgestellten Zielbehälter 6 abgelegt werden. Auch ist es möglich, dass die Artikel in einem, auf einem neben der Kommissionierstation 49 vorgesehenen Pufferplatz bereitgestellten Ladehilfsmittel, wie eine Palette, abgelegt werden.

In der Fig. 6 befindet sich die erste Aufnahmeeinheit 62 in der Übernahmeposition 96, in welcher der dritte Quellbehälter 2.3 von der ersten Fördertechnik 20 auf die erste Aufnahmeeinheit 62 übergeben werden kann. Die zweite Aufnahmeeinheit 63 befindet sich in der Übernahmeposition 100, in welcher der zweite Quellbehälter 2.2 von den noch in die Aufnahmeposition verstellten Abstellelementen 92 abgehoben wurde. Der vierte Quellbehälter 2.4 wird währenddessen in Richtung zum vorderen Ende der ersten Fördertechnik 20 gefördert.

Gemäß den Fig. 7 und 8 sind die Abstellelemente 92 in die Ausgangsposition verstellt worden, sodass der zweite Quellbehälter 2 bzw. dritte Quellbehälter 2 zwischen den Abstellelemente 92 hindurch bewegt werden kann. Somit kann die erste Aufnahmeeinheit 62 wieder aus der Übernahmeposition 96 in die Übergabeposition 97 bewegt werden, in welcher der dritte Quellbehälter 2.3 auf die noch in die Aufnahmeposition zu verstellenden Abstellelemente 92 übergeben wird. Währenddessen wird der zweite Quellbehälter 2.2 mittels der zweiten Aufnahmeeinheit 63 zur zweiten Fördertechnik 41 abgefördert. Der vierte Quellbehälter 2.4 wird am vorderen Ende der ersten Fördertechnik 20 bereitgestellt und ein fünfter Quellbehälter 2.5 in Richtung zum vorderen Ende der ersten Fördertechnik 20 gefördert.

Demnach wird erkennbar, dass die Aufnahmeeinheit 62, 63 über den Positionierantrieb 65 entlang dem Transportweg 64 pendelnd zwischen der an der ersten Fördertechnik 20, 21 vorgesehenen Übernahmeposition 96 für einen Quellbehälter 2 bzw. Zielbehälter 6 und an der zweiten Fördertechnik 41, 42 vorgesehenen Übergabeposition 101 für einen Quellbehälter 2 bzw. Zielbehälter 6 sowie pendelnd zwischen dieser Übernahme- und Übergabeposition 96, 101 und einer Übergabe- und Übernahmeposition 97, 100 an der Andienungsvorrichtung 61 vorgesehenen Übergabe- und Übernahmeposition 97, 100 verstellt wird. Wird die Förderbewegung der Quellbehälter 2 bzw. Zielbehälter 6 umgekehrt von oben nach unten, so definiert die Übernahmeposition 96 eine Übergabeposition 96 und die Übergabeposition 101 eine Übernahmeposition 101. Ebenso definiert die Übergabeposition 97 eine Übernahmeposition 97 und die Übernahmeposition 100 eine Übergabeposition 100.

Der Begriff "pendelnd" bedeutet dabei, dass einerseits in einem ersten Verstellzyklus zum Abtransport eines ersten Ladehilfsmittels 2, 6 von der Andienungsvorrichtung 61 und andererseits zum Antransport eines zweiten Ladehilfsmittels 2, 6 zu der Andienungsvorrichtung 61 die bewegungsgekoppelten (beladenen) Aufnahmeeinheiten 62, 63 in eine erste Bewegungsrichtung 85 (Fig. 7, 8) in die Übergabe- bzw. Übernahmepositionen 97, 101 bewegt werden.

Betrifft die Förderbewegung der Ladehilfsmittel 2, 6 von unten nach oben, so werden nach der Übergabe des ersten Ladehilfsmittels 2, 6 von der Aufnahmeeinheit 63 auf die Fördertechnik 41, 42 einerseits und Übergabe des zweiten Ladehilfsmittels 2, 6 von der Aufnahmeeinheit 62 an die Andienungsvorrichtung 61 andererseits, in einem darauffolgenden zweiten Verstellzyklus die bewegungsgekoppelten (entladenen) Aufnahmeeinheiten 62, 63 entgegen der ersten Bewegungsrichtung 85 (Fig. 5) wieder in die Übernahmepositionen 96, 100 an der Fördertechnik 20, 21 und der Andienungsvorrichtung 61 zurückbewegt.

Betrifft die Förderbewegung der Ladehilfsmittel 2, 6 von oben nach unten, so werden nach der Übergabe des ersten Ladehilfsmittels 2, 6 von der Aufnahmeeinheit 63 an die Andienungsvorrichtung 61 einerseits und des zweiten Ladehilfsmittels 2, 6 von der Aufnahmeeinheit 62 auf die Fördertechnik 20, 21 andererseits, in einem darauffolgenden zweiten Verstellzyklus die bewegungsgekoppelten (entladenen) Aufnahmeeinheiten 62, 63 entgegen der ersten Bewegungsrichtung 85 wieder in die Übernahmepositionen 97, 101 an der Fördertechnik 41, 42 und der Andienungsvorrichtung 61 zurückbewegt.

Die Bewegungen der Aufnahmeeinheiten 62, 63 zwischen den Übergabe- bzw. Übernahmepositionen 97, 100; 96, 101 an der Andienungsvorrichtung 61 und der Fördertechnik 20, 21, 41, 42 sind sehr kurz. Dadurch können die Ladehilfsmittel 2, 6 sehr rasch zwischen den Fördertechniken 20, 21, 41, 42 umgesetzt werden, wobei zur Entkoppelung der Verstellbewegung der Aufnahmeeinheiten 62, 63 und dem Kommissioniervorgang die Andienungsvorrichtung 61 vorgesehen ist. Demnach definieren die Übernahmeposition 96 und Übergabeposition 101 an den Fördertechniken 20, 21, 41, 42 eine erste Umkehrposition (Endposition) und zweite Umkehrposition (Endposition) für die Verstellbewegung der Aufnahmeeinheiten 62, 63. Der zumindest eine Antriebsmotor 67 für den Positionierantrieb, der typischerweise als elektronisch reversierbarer Elektromotor ausgebildet ist, wird von der Steuereinheit entsprechend gesteuert.

Die Ausführungsbeispiele zeigen mögliche Ausführungsvarianten des Kommissioniersystems, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Kommissionierstation, des Kommissioniersystems und Lagersystems diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Regallager | 36 | Verteilsystem |
| 2 | Quellbehälter (Lagerbehälter) | 37 | Förderbahnabschnitt |
| 3 | erstes Verteilsystem | 38 | Förderbahnabschnitt |
| 4 | Kommissionier-Arbeitsplatz | 39 | Förderbahnabschnitt |
| 5 | Kommissioniersystem | 40 | obere Förderebene |
| | | | |
| 6 | Zielbehälter (Auftragsbehälter) | 41 | zweite Fördertechnik |
| 7 | Kommissionierperson | 42 | zweite Fördertechnik |
| 8 | zweites Verteilsystem | 43 | Einschleusvorrichtung |
| 9 | Kommissionier-Arbeitsplatz | 44 | Einschleusvorrichtung |
| 10 | Lagerregal | 45 | Ausschleusvorrichtung |
| | | | |
| 11 | Stellplatz | 46 | Förderbahn |
| 12 | Regalförderfahrzeug | 47 | Ausschleusvorrichtung |
| 13 | Plattform | 48 | Kommissionierstation |
| 14 | Lastaufnahmevorrichtung | 49 | Kommissionierstation |
| 15 | Einlagerbahn | 50 | Rahmen |
| | | | |
| 16 | Auslagerbahn | 51 | Abstützleiste |
| 17 | Förderbahnabschnitt | 52 | Eingabeeinheit |
| 18 | Förderbahnabschnitt | 53 | Ausgabeeinheit |
| 19 | Förderbahnabschnitt | 54 | Seitenwand |
| 20 | erste Fördertechnik | 55 | Vorderwand |
| | | | |
| 21 | erste Fördertechnik | 56 | Deckwand |
| 22 | Bereitstellungsbahn | 57 | Öffnung |
| 23 | Rücklagerbahn | 58 | Ausnehmung |
| 24 | Sammelstation | 59 | Kupplungselement |
| 25 | Einschleusvorrichtung | 60 | |
| | | | |
| 26 | Einschleusvorrichtung | 61 | Behälter-Andienungsvorrichtung |
| 27 | Einschleusvorrichtung | 62 | Aufnahmeeinheit |
| 28 | Ausschleusvorrichtung | 63 | Aufnahmeeinheit |
| 29 | Ausschleusvorrichtung | 64 | Transportweg |
| 30 | Ausschleusvorrichtung | 65 | Positionierantrieb |
| | | | |
| 31 | Förderbahnabschnitt | 66 | Antriebsstation |
| 32 | Förderbahnabschnitt | 67 | Antriebsmotor |
| 33 | Förderbahnabschnitt | 68 | Zugmitteltrieb |
| 34 | Förderweiche | 69 | Umlenkrad |
| 35 | untere Förderebene | 70 | Antriebsrad |
| 71 | Antriebswelle | 106 | Längsabstand |
| 72 | Führungsorgan | 107 | Längsabmessung |
| 73 | Führungsanordnung | 108 | Seitenwand |
| 74 | Führungsrahmen | 109 | Längsabmessung |
| 75 | Aufnahmeplattform | | |
| | | | |
| 76 | Befestigungsmittel | | |
| 77 | Rückhalteelement | | |
| 78 | Führungsorgan | | |
| 79 | Führungsanordnung | | |
| 80 | Führungsrahmen | | |
| | | | |
| 81 | Aufnahmeplattform | | |
| 82 | Befestigungsmittel | | |
| 83 | Rückhalteelement | | |
| 84 | Auffahrebene | | |
| 85 | Bewegungsrichtung | | |
| | | | |
| 86 | Führungsebene | | |
| 87 | Führungsebene | | |
| 88 | Lagerachse | | |
| 89 | Aufnahmefläche | | |
| 90 | Förderebene | | |
| | | | |
| 91 | Aufstandsfläche | | |
| 92 | Abstellelement | | |
| 93 | Stellantrieb | | |
| 94 | Abstellzunge | | |
| 95 | Positionierelement | | |
| | | | |
| 96 | Übernahmeposition | | |
| 97 | Übergabeposition | | |
| 98 | Förderebene | | |
| 99 | Andienungsposition | | |
| 100 | Übernahmeposition | | |
| | | | |
| 101 | Übergabeposition | | |
| 102 | Übergabevorrichtung | | |
| 103 | Fördervorrichtung | | |
| 104 | Übergabevorrichtung | | |
| 105 | Fördervorrichtung | | |

## Patentansprüche

1. Kommissionierstation (48, 49) zum Kommissionieren von Artikeln aus Ladehilfsmitteln (2, 6), wie Behälter, Karton, Tablar etc., durch eine Kommissionierperson (7), welche an auf unterschiedlichem Höhenniveau angeordnete automatisierte Fördertechniken (20, 21, 41, 42) anschließt, wobei auf einer ersten Fördertechnik (20, 21) Ladehilfsmittel (2, 6) zur Kommissionierstation (48, 49) angefördert und auf einer zweiten Fördertechnik (41, 42) Ladehilfsmittel (2, 6) von der Kommissionierstation (48, 49) abgefördert werden, und eine Ladehilfsmittel-Andienungsvorrichtung (61), eine automatisierte erste Ladehilfsmittel-Transportvorrichtung zum Antransport von Ladehilfsmitteln (2, 6) zu der Ladehilfsmittel-Andienungsvorrichtung (61) und eine automatisierte zweite Ladehilfsmittel-Transportvorrichtung zum Abtransport von Ladehilfsmitteln (2, 6) von der Ladehilfsmittel-Andienungsvorrichtung (61) umfasst, wobei die erste Ladehilfsmittel-Transportvorrichtung eine im Wesentlichen in vertikaler Richtung bewegbare erste Aufnahmeeinheit (62) für ein Ladehilfsmittel (2, 6) und die zweite Ladehilfsmittel-Transportvorrichtung eine im Wesentlichen in horizontaler Richtung bewegbare zweite Aufnahmeeinheit (63) für ein Ladehilfsmittel (2, 6) aufweist, **dadurch gekennzeichnet, dass** die erste Aufnahmeeinheit (62) und zweite Aufnahmeeinheit (63) mit einem gemeinsamen, reversierbaren Positionierantrieb (65) gekoppelt sind, wobei der Positionierantrieb (65) zumindest einen Zugmitteltrieb (68) aufweist und dass sowohl die erste Aufnahmeeinheit (62) als auch die zweite Aufnahmeeinheit (63) mit dem zumindest einen Zugmitteltrieb (68) verbunden und über diesen zumindest einen Zugmitteltrieb (68) bewegungsgekoppelt sind.

2. Kommissionierstation nach Anspruch 1, **dadurch gekennzeichnet, dass** der Positionierantrieb (65) eine Antriebsstation (66) mit einem reversierbaren Antriebsmotor, insbesondere einen reversierbaren Elektromotor, und den zumindest einen Zugmitteltrieb (68) umfasst.

3. Kommissionierstation nach Anspruch 1, **dadurch gekennzeichnet, dass** der Positionierantrieb (65) eine Antriebsstation (66) und zu beiden Seiten eines Transportweges (64) der Ladehilfsmittel (2, 6) entlang der Ladehilfsmittel-Transportvorrichtungen angeordnete, synchron antreibbare Zugmitteltriebe (68) umfasst.

4. Kommissionierstation nach Anspruch 2 oder 3, **dadurch gekennzeichnet, dass** die Antriebsstation (66) einen einzigen reversierbaren Antriebsmotor, insbesondere reversierbaren Elektromotor, umfasst.

5. Kommissionierstation nach einem der Ansprüche 1 bis 3, **dadurch gekennzeichnet, dass** die erste Aufnahmeeinheit (62) für ein Ladehilfsmittel (2, 6) mit dem Positionierantrieb (65), insbesondere mit dem oder den Zugmitteltrieben (68), derart gekoppelt ist, dass die Aufnahmeeinheit (62) zwischen einer Übernahme- bzw. Übergabeposition (96) an der ersten Fördertechnik (20, 21) und einer Übergabe- bzw. Übernahmeposition (97) an der Andienungsvorrichtung (61) verstellbar ist.

6. Kommissionierstation nach einem der Ansprüche 1 bis 5, **dadurch gekennzeichnet, dass** die zweite Aufnahmeeinheit (63) für ein Ladehilfsmittel (2, 6) mit dem Positionierantrieb (65), insbesondere dem oder den Zugmitteltrieben (68), derart gekoppelt ist, dass die Aufnahmeeinheit (63) zwischen einer Übernahme- bzw. Übergabeposition (100) an der Andienungsvorrichtung (61) und einer Übergabe- bzw. Übernahmeposition (101) an der zweiten Fördertechnik (41, 42) verstellbar ist.

7. Kommissionierstation nach einem der Ansprüche 1 bis 6, **dadurch gekennzeichnet, dass** die zweite Fördertechnik (41, 42) in einem ersten Förderabschnitt eine Übergabevorrichtung (104) und in einem zweiten Förderabschnitt eine Fördervorrichtung (105) umfasst, wobei die Übergabevorrichtung (104) die Fördervorrichtung (105) und die zweite Aufnahmeeinheit (63) derart verbindet, dass ein Ladehilfsmittel (2, 6) zwischen der zweiten Fördertechnik (41, 42) und der zweiten Aufnahmeeinheit (63) förderbar ist.

8. Kommissionierstation nach Anspruch 1, **dadurch gekennzeichnet, dass** die Ladehilfsmittel-Andienungsvorrichtung (61) im Transportweg (64) zwischen der ersten Fördertechnik (20, 21) und zweiten Fördertechnik (41, 42) angeordnet ist und zu beiden Seiten des Transportweges (64) jeweils zumindest ein Abstellelement (92) für ein Ladehilfsmittel (2, 6) umfasst, welche Abstellelemente (92) durch zumindest einen Stellantrieb (93) zwischen einer Ausgangsposition, in welcher ein Ladehilfsmittel (2, 6) zwischen den Abstellelementen (92) bewegbar ist, und einer Aufnahmeposition, in welcher ein Ladehilfsmittel (2, 6) auf den Abstellelementen (92) an der Ladehilfsmittel-Andienungsvorrichtung (61) andienbar ist, verstellbar sind.

9. Kommissioniersystem (5) zum Kommissionieren von Artikeln aus zumindest einem Quell-Ladehilfsmittel (2) in zumindest ein Ziel-Ladehilfsmittel (6) durch eine Kommissionierperson (7), welche eine Kommissionierstation (49) für das Quell-Ladehilfsmittel (2) und eine Kommissionierstation (48) für das Ziel-Ladehilfsmittel (6) umfasst, **dadurch gekennzeichnet, dass** die Kommissionierstationen (48, 49) nach einem der Ansprüche 1 bis 8 ausgebildet sind.

10. Kommissioniersystem nach Anspruch 9, **dadurch gekennzeichnet, dass** die Kommissionierstationen (48, 49) in einer Reihe nebeneinander aufgestellt sind, wobei eine Kommissionierstation (48) für Ziel-Ladehilfsmittel (6) zwischen Kommissionierstationen (49) für Quell-Ladehilfsmittel (2) angeordnet ist.

11. Lagersystem mit einem Regallager (1), einer automatisierten Fördertechnik (12 bis 16) zur Einlagerung von Quell-Ladehilfsmitteln (2) in das Regallager (1) bzw. Auslagerung von Quell-Ladehilfsmitteln (2) aus dem Regallager (1), einem automatisierten ersten Verteilsystem (3) zum Transport der Quell-Ladehilfsmittel (2) aus dem Regallager (1) zu einem jeweiligen einer Mehrzahl von Kommissionier-Arbeitsplätzen (4) mit jeweils einem Kommissioniersystem (5) zum Kommissionieren von Artikeln aus zumindest einem Quell-Ladehilfsmittel (2) in zumindest ein Ziel-Ladehilfsmittel (6) durch eine Kommissionierperson (7), und einem automatisierten zweiten Verteilsystem (36) zum Abtransport der Quell-Ladehilfsmittel (2) von den Kommissionier-Arbeitsplätzen (4), wobei zumindest eines der Kommissioniersysteme (5) eine Kommissionierstation (49) für Quell-Ladehilfsmittel (2) und eine Kommissionierstation (48) für Ziel-Ladehilfsmittel (6) umfasst, wobei die Kommissionierstationen (48, 49) jeweils durch eine erste Fördertechnik (20, 21), welche Ladehilfsmittel (2, 6) zur jeweiligen Kommissionierstation (48, 49) anfördert, an das erste Verteilsystem (3) angeschlossen ist, und durch eine zweite Fördertechnik (41, 42), welche Ladehilfsmittel (2, 6) von der Kommissionierstation (48, 49) abfördert, an das zweite Verteilsystem (36) angeschlossen ist, **dadurch gekennzeichnet, dass** die Kommissionierstationen (48, 49) des Kommissioniersystems (5) gemäß einem der Ansprüche 1 bis 8 ausgebildet sind.

12. Lagersystem nach Anspruch 11, **gekennzeichnet durch** das automatisierte zweite Verteilsystem (36) zum Transport von Quell-Ladehilfsmittel (2) zu einer Rücklager-Fördertechnik (23) und/oder zum Transport von Ziel-Ladehilfsmitteln (6) zu Kommissionieraufträgen zwischen den Kommissionier-Arbeitsplätzen (4), an welchem über die zweiten Fördertechniken (41, 42), welche Quell- und/oder Ziel-Ladehilfsmittel (2, 6) von der Kommissionierstation (48, 49) abfördern, die Kommissionierstationen (48, 49) der Kommissionier-Arbeitsplätze (4) angeschlossen sind.

13. Verfahren zum Kommissionieren von Artikeln aus Ladehilfsmitteln (2), wie Behälter, Karton, Tablar etc., durch eine Kommissionierperson (7), an einer Kommissionierstation (48, 49), welche an auf unterschiedlichem Höhenniveau angeordnete automatisierte Fördertechniken (20, 21, 41, 42) anschließt, wobei auf einer ersten Fördertechnik (20, 21) Ladehilfsmittel (2, 6) zur Kommissionierstation (48, 49) angefördert und auf einer zweiten Fördertechnik (41, 42) Ladehilfsmittel (2, 6) von der Kommissionierstation (48, 49) abgefördetrt werden, umfassend eine Ladehilfsmittel-Andienungsvorrichtung (61), eine automatisierte erste Ladehilfsmittel-Transportvorrichtung mit einer ersten Aufnahmeeinheit (62) zum Antransport von Ladehilfsmitteln (2, 6) zu der Ladehilfsmittel-Andienungsvorrichtung (61) und eine automatisierte zweite Ladehilfsmittel-Transportvornichtung mit einer zweiten Aufnahmeeinheit (63) zum Abtransport von Ladehilfsmitteln (2, 6) von der Ladehilfsmittel-Andienungsvorrichtung (61), bei dem ein Ladehilfsmittel (2, 6) von der ersten Fördertechnik (20, 21) über die erste Aufnahmeeinheit (62) zu der Andienungsvorrichtung (61) gefördert und zum Kommissionieren an der Andienungsvorrichtung (61) bereitgestellt sowie nach dem Kommissioniervorgang von der Andienungsvorrichtung (61) über die zweite Aufnahmeeinheit (63) zur zweiten Fördertechnik (41, 42) gefördert wird, **dadurch gekennzeichnet, dass** die erste Aufnahmeeinheit (62) und zweite Aufnahmeeinheit (63) über zumindest einen Zugmitteltrieb (68) eines gemeinsamen Positionieranttiebes (65) gleichzeitig und derart pendelnd gemeinsam in die jeweilige der entgegengesetzten Bewegungsrichtungen (85) entlang eines Transportweges (64) zwischen den Fördertechniken (20, 21, 41,42) bewegt werden, dass ein erstes Ladehilfsmittel (2, 6) zwischen einer der Fördertechniken (20, 21, 41, 42) und einer der Aufnahmeeinheiten (62, 63) gefördert und ein zweites Ladehilfsmittel (2, 6) von der anderen der Aufnahmeeinheiten (62, 63) an der Andienungsvorrichtung (61) bereitgestellt wird.

14. Verfahren nach Anspruch 13, **dadurch gekennzeichnet, dass** in einem ersten Bewegungszyklus zum Abtransport eines ersten Ladehilfsmittels (2, 6) von der Andienungsvorrichtung (61) und zum Antransport eines zweiten Ladehilfsmittels (2, 6) zu der Andienungsvorrichtung (61) die bewegungsgekoppelten Aufnahmeeinheiten (62, 63) in einer ersten Bewegungsrichtung (85) zu Übergabepositionen bzw. Übernahmepositionen (96, 100, 97, 101) an der Fördertechnik (20, 21, 41, 42) und Andienungsvorrichtung (61) bewegt werden.

15. Verfahren nach Anspruch 13 oder 14, **dadurch gekennzeichnet, dass** nach der Übergabe des ersten Ladehilfsmittels (2, 6) von der einen Aufnahmeeinheit (63) auf die Fördertechnik (41, 42) und des zweiten Ladehilfsmittels (2, 6) von der anderen Aufnahmeeinheit (62) an die Andienungsvorrichtung (61), in einem darauffolgenden zweiten Bewegungszyklus die bewegungsgekoppelten Aufnahmeeinheiten (62, 63) entgegen der ersten Bewegungsrichtung (85) wieder in die Übernahmepositionen (96, 100) an der Fördertechnik (20, 21) und Andienungsvorrichtung (61) zurückbewegt werden.

16. Verfahren nach Anspruch 13 oder 14, **dadurch gekennzeichnet, dass** nach der Übergabe des ersten Ladehilfsmittels (2, 6) von der einen Aufnahmeeinheit (63) auf die Andienungsvorrichtung (61) und des zweiten Ladehilfsmittels (2, 6) von der anderen Aufnahmeeinheit (62) auf die Fördertechnik (20, 21), in einem darauffolgenden zweiten Bewegungszyklus die bewegungsgekoppelten Aufnahmeeinheiten (62, 63) entgegen der ersten Bewegungsrichtung (85) wieder in die Übernahmepositionen (97, 101) an der Fördertechnik (41, 42) und Andienungsvorrichtung (61) zurückbewegt werden.

## Claims

1. An order picking station (48, 49) for picking articles from loading aids (2, 6), such as containers, boxes, trays etc., by an order picker (7), said order picking station adjoining automated conveyor systems (20, 21, 41, 42) disposed on different height levels, wherein loading aids (2, 6) are conveyed to the order picking station (48, 49) on a first conveyor system (20, 21) and loading aids (2, 6) are conveyed away from the order picking station (48, 49) on a second conveyor system (41, 42), and comprising a loading aid supply apparatus (61), an automated first loading aid transport apparatus for transporting loading aids (2, 6) to the loading aid supply apparatus (61) and an automated second loading aid transport apparatus for transporting loading aids (2, 6) away from the loading aid supply apparatus (61), wherein the first loading aid transport apparatus comprises a first carrying unit (62) for a loading aid (2, 6) displaceable essentially in the vertical direction and the second loading aid transport apparatus comprises a second carrying unit (63) for a loading aid (2, 6) displaceable essentially in the horizontal direction, **characterised in that** the first carrying unit (62) and second carrying unit (63) are coupled with a common, reversible positioning drive (65), wherein the positioning drive (65) comprises at least one traction drive (68), and that both the first carrying unit (62) and the second carrying unit (63) are connected to the at least one traction drive (68) and are coupled in displacement by means of this at least one traction drive (68).

2. The order picking station according to claim 1, **characterised in that** the positioning drive (65) comprises a drive station (66) with a reversible drive motor, in particular a reversible electric motor, and the at least one traction drive (68).

3. The order picking station according to claim 1, **characterised in that** the positioning drive (65) comprises a drive station (66) and synchronously drivable traction drives (68) disposed on either side of a transport path (64) of the loading aids (2, 6) along the loading aid transport apparatuses.

4. The order picking station according to claim 2 or 3, **characterised in that** the drive station (66) comprises a single reversible drive motor, in particular a reversible electric motor.

5. The order picking station according to any one of claims 1 to 3, **characterised in that** the first carrying unit (62) for a loading aid (2, 6) is coupled with the positioning drive (65), in particular with the traction drive or drives (68), in such a way that the carrying unit (62) can be displaced between a pick-up and transfer position (96) at the first conveyor system (20, 21) and a transfer and pick-up position (97) at the supply apparatus (61).

6. The order picking station according to any one of claims 1 to 5, **characterised in that** the second carrying unit (63) for a loading aid (2, 6) is coupled with the positioning drive (65), in particular the traction drive or drives (68), in such a way that the carrying unit (63) can be displaced between a pick-up and transfer position (100) at the supply apparatus (61) and a transfer and pick-up position (101) at the second conveyor system (41,42).

7. The order picking station according to any one of claims 1 to 6, **characterised in that** the second conveyor system (41, 42) comprises a transfer device (104) in a first conveyor portion and a conveyor device (105) in a second conveyor portion, wherein the transfer device (104) connects the conveyor device (105) and the second carrying unit (63) in such a way that a loading aid (2, 6) can be conveyed between the second conveyor system (41, 42) and the second carrying unit (63).

8. The order picking station according to claim 1, **characterised in that** the loading aid supply apparatus (61) is disposed in the transport path (64) between the first conveyor system (20, 21) and second conveyor system (41, 42) and comprises at least one parking element (92) for a loading aid (2, 6) on either side of the transport path (64) respectively, which parking elements (92) can be moved by means of at least one actuator drive (93) between an initial position in which a loading aid (2, 6) can be moved between the parking elements (92) and a pick-up position in which a loading aid (2, 6) can be held ready for picking on the parking elements (92) at the loading aid supply apparatus (61).

9. The order picking system (5) wherein articles are picked from at least one source loading aid (2) and placed in at least one destination loading aid (6) by an order picker (7), comprising an order picking station (49) for the source loading aid (2) and an order picking station (48) for the destination loading aid (6), **characterised in that** the order picking stations (48, 49) are constituted according to any one of claims 1 to 8.

10. The order picking system according to claim 9, **characterised in that** the order picking stations (48, 49) are installed adjacent to one another in a row, wherein an order picking station (48) for destination loading aids (6) is disposed between order picking stations (49) for source loading aids (2).

11. A storage system with bay racking (1), an automated conveyor system (12 to 16) for storing source loading aids (2) in the bay racking (1) and retrieving source loading aids (2) from the bay racking (1), an automated first distribution system (3) for transporting the source loading aids (2) out of the bay racking (1) to one of a plurality of respective order picking workstations (4), each having an order picking system (5) by which articles can be picked from at least one source loading aid (2) and placed in at least one destination loading aid (6) by an order picker (7), and an automated second distribution system (36) for transporting the source loading aids (2) away from the order picking workstations (4), wherein at least one of the order picking systems (5) comprises an order picking station (49) for source loading aids (2) and an order picking station (48) for destination loading aids (6), wherein the order picking stations (48, 49) are respectively connected to the first distribution system (3) by a first conveyor system (20, 21) which conveys loading aids (2, 6) to the respective order picking station (48, 49) and to the second distribution system (36) by a second conveyor system (41, 42) which conveys loading aids (2, 6) away from the order picking station (48, 49), **characterised in that** the order picking stations (48, 49) of the order picking system (5) are constituted according to any one of claims 1 to 8.

12. The storage system according to claim 11, **characterised by** the automated second distribution system (36) for transporting source loading aids (2) to a storage return conveyor system (23) and/or for transporting destination loading aids (6) for picking orders between the order picking workstations (4), at which the order picking stations (48, 49) of the order picking workstations (4) are connected by the second conveyor systems (41, 42) which convey source and/or destination loading aids (2, 6) away from the order picking station (48, 49).

13. A method for picking articles from loading aids (2), such as containers, boxes, trays, etc., by an order picker (7) at an order picking station (48, 49) which adjoins automated conveyor systems (20, 21, 41, 42) disposed on different height levels, wherein loading aids (2, 6) are conveyed to the order picking station (48, 49) on a first conveyor system (20, 21) and loading aids (2, 6) are conveyed away from the order picking station (48, 49) on a second conveyor system (41, 42), comprising a loading aid supply apparatus (61), an automated first loading aid transport apparatus with a first carrying unit (62) for transporting loading aids (2, 6) to the loading aid supply apparatus (61) and an automated second loading aid transport apparatus with a second carrying unit (63) for transporting loading aids (2, 6) away from the loading aid supply apparatus (61), wherein a loading aid (2, 6) is conveyed by the first conveyor system (20, 21) via the first carrying unit (62) to the supply apparatus (61) and positioned in readiness for picking at the supply apparatus (61) and is conveyed away from the supply apparatus (61) via the second carrying unit (63) to the second conveyor system (41, 42) after the picking operation, **characterised in that** the first carrying unit (62) and second carrying unit (63) are moved by means of at least one traction drive (68) of a common positioning drive (65) simultaneously and jointly in a shuttling motion in the respective opposite directions of movement (85) along a transport path (64) between the conveyor systems (20, 21, 41, 42) such that a first loading aid (2, 6) is conveyed between one of the conveyor systems (20, 21, 41, 42) and one of the carrying units (62, 63) and a second loading aid (2, 6) is positioned in readiness at the supply apparatus (61) by the other one of the carrying units (62, 63).

14. The method according to claim 13, **characterised in that**, during a first movement cycle for transporting a first loading aid (2, 6) away from the supply apparatus (61) and transporting a second loading aid (2, 6) to the supply apparatus (61), the carrying units (62, 63), coupled in displacement, are moved in a first direction of movement (85) to transfer positions or pick-up positions (96, 100, 97, 101) at the conveyor system (20, 21, 41, 42) and supply apparatus (61).

15. The method according to claim 13 or 14, **characterised in that**, after transferring the first loading aid (2, 6) from one carrying unit (63) onto the conveyor system (41, 42) and transferring the second loading aid (2, 6) from the other carrying unit (62) onto the supply apparatus (61), the carrying units (62, 63), coupled in displacement, are moved opposite the first direction of movement (85) back into the pick-up positions (96, 100) at the conveyor system (20, 21) and supply apparatus (61) during a subsequent second movement cycle.

16. The method according to claim 13 or 14, **characterised in that**, after transferring the first loading aid (2, 6) from one carrying unit (63) onto the supply apparatus (61) and transferring the second loading aid (2, 6) from the other carrying unit (62) onto the conveyor system (20, 21), the carrying units (62, 63), coupled in displacement, are moved opposite the first direction of movement (85) back into the pick-up positions (97, 101) at the conveyor system (41, 42) and supply apparatus (61) during a subsequent second movement cycle.

## Revendications

1. Poste de préparation de commandes (48, 49) pour grouper des articles provenant de moyens auxiliaires de chargement (2, 6) tels un récipient, un carton, un plateau etc. par un opérateur de préparation de commandes (7), lequel poste est agencé à la suite de moyens de transport automatisés (20, 21, 41, 42) disposés à des niveaux différents, des moyens auxiliaires de chargement (2, 6) étant amenés au poste de préparation de commandes (48, 49) sur des premiers moyens de transport (20, 21) et des moyens auxiliaires de chargement (2, 6) étant évacués du poste de préparation de commandes (48, 49) sur des deuxièmes moyens de transport (41, 42), et un dispositif de mise à disposition (61) de moyens auxiliaires de transport comprenant un premier dispositif de transport automatisé de moyens auxiliaires de chargement pour amener des moyens auxiliaires de chargement (2, 6) au dispositif de mise à disposition (61) de moyens auxiliaires de chargement et un deuxième dispositif de transport automatisé de moyens auxiliaires de chargement pour évacuer des moyens auxiliaires de chargement (2, 6) du dispositif de mise à disposition (61) de moyens auxiliaires de chargement, le premier dispositif de transport de moyens auxiliaires de chargement comportant une première unité de réception (62) pour un moyen auxiliaire de chargement (2, 6), qui est mobile sensiblement en direction verticale, et le deuxième dispositif de transport de moyens auxiliaires de chargement comportant une deuxième unité de réception (63) pour un moyen auxiliaire de chargement (2, 6), qui est mobile sensiblement en direction horizontale, **caractérisé en ce que** la première unité de réception (62) et la deuxième unité de réception (63) sont accouplées à un entraînement de positionnement commun réversible (65), l'entraînement de positionnement (65) comprenant au moins un moyen d'entraînement en traction (68) et **en ce qu'**aussi bien la première unité de réception (62) que la deuxième unité de réception 63) sont reliées à l'au moins un moyen d'entraînement en traction (68) et sont reliées en mouvement l'une à l'autre par le moyen d'entraînement en traction (68).

2. Poste de préparation de commandes selon la revendication 1, **caractérisé en ce que** l'entraînement en positionnement (65) comprend une station d'entraînement (66) avec un moteur d'entraînement réversible, notamment un moteur électrique réversible, et le moyen d'entraînement en traction (68).

3. Poste de préparation de commandes selon la revendication 1, **caractérisé en ce que** l'entraînement en positionnement (65) comprend une station d'entraînement (66) et des moyens d'entraînement en traction (68) disposés des deux côtés d'un chemin de transport (64) des moyens auxiliaires de chargement (2, 6) et aptes à être entraînés de manière synchrone.

4. Poste de préparation de commandes selon la revendication 2 ou 3, **caractérisé en ce que** la station d'entraînement (66) comprend un seul moteur d'entraînement réversible, notamment moteur électrique réversible.

5. Poste de préparation de commandes selon l'une quelconque des revendications 1 à 3, **caractérisé en ce que** la première unité de réception (62) pour un moyen auxiliaire de chargement (2, 6) est accouplé à l'entraînement en positionnement (65), notamment au(x) moyen(s) d'entraînement en traction (68) de façon que l'unité de réception (62) est réglable entre une position respectivement de réception ou de transfert (96) près des premiers moyens de transport (20, 21) et une position respectivement de transfert ou de réception (97) près du dispositif de mise à disposition (61).

6. Poste de préparation de commandes selon l'une quelconque des revendications 1 à 5, **caractérisé en ce que** la deuxième unité de réception (63) pour un moyen auxiliaire de chargement (2, 6) est accouplé à l'entraînement en positionnement (65), notamment au(x) moyen(s) d'entraînement en traction (68) de façon que l'unité de réception (63) est réglable entre une position respectivement de réception ou de transfert (100) près du dispositif de mise à disposition (61) et une position respectivement de transfert ou de réception (101) près des deuxièmes moyens de transport (41, 42).

7. Poste de préparation de commandes selon l'une quelconque des revendications 1 à 6, **caractérisé en ce que** les deuxièmes moyens de transport (41, 42) comprennent, dans une première zone de transport, un dispositif de transfert (104) et, dans une deuxième zone de transport, un dispositif de transport (105), le dispositif de transfert (104) reliant le dispositif de transport (105) et la deuxième unité de réception (63) de façon qu'un moyen auxiliaire de chargement (2, 6) est transportable entre les deuxièmes moyens de transport (41, 42) et la deuxième unité de réception (63).

8. Poste de préparation de commandes selon la revendication 1, **caractérisé en ce que** le dispositif de mise à disposition (61) de moyens auxiliaires de chargement est disposé sur le chemin de transport (64) entre les premiers moyens de transport (20, 21) et les deuxièmes moyens de transport (41, 42) et comprend, des deux côtés du chemin de transport (64), au moins un élément de dépôt (92) pour un moyen auxiliaire de chargement (2, 6), lesquels éléments de dépôt (92) étant réglables par au moins un dispositif d'actionnement (93) entre une position de départ dans laquelle un moyen auxiliaire de chargement (2, 6) est déplaçable entre les éléments de dépôts (92), et une position de réception dans laquelle un moyen auxiliaire de chargement (2, 6) peut être mis à disposition sur les éléments de dépôt (92) au dispositif de mise à disposition (61) de moyens auxiliaires de chargement.

9. Système de préparation de commandes (5) pour grouper des articles provenant d'au moins un moyen auxiliaire source de chargement (2) dans au moins un moyen auxiliaire cible de chargement (6) par un opérateur de préparation de commandes (7), qui comprend un poste de préparation de commandes (49) pour le moyen auxiliaire source de chargement (2) et un poste de préparation de commandes (48) pour le moyen auxiliaire cible de chargement (6), **caractérisé en ce que** les postes de préparation de commandes (48, 49) sont conçus selon l'une quelconque des revendications 1 à 8.

10. Système de préparation de commandes selon la revendication 9, **caractérisé en ce que** les postes de préparation de commandes (48, 49) sont disposés les uns à côtés des autres sur une ligne, un poste de préparation de commandes (48) pour un moyen auxiliaire cible de chargement (6) étant disposé entre des postes de préparation de commandes (49) pour des moyens auxiliaires source de chargement (2).

11. Système de stockage avec un magasin à rayonnages (1), des moyens de transport automatisés (12 à 16) pour la mise en stock de moyens auxiliaires source de chargement (2) dans le magasin à rayonnages (1) ou respectivement la sortie du stock de moyens auxiliaires source de chargement (2) du magasin à rayonnages (1), un premier système de distribution automatisé (3) pour le transport des moyens auxiliaires source de chargement (2) du magasin à rayonnages (1) vers une place de travail respective d'une pluralité de places de travail de préparation de commandes (4) ayant chacune un système de préparation de commandes (5) pour grouper des articles provenant d'au moins un moyen auxiliaire source de chargement (2) dans au moins un moyen auxiliaire cible de chargement (6) par un opérateur de préparation de commandes (7), et un deuxième système de distribution automatisé (36) pour l'évacuation des moyens auxiliaires source de chargement (2) des places de travail de préparation de commandes (4), où au moins un des systèmes de préparation de commandes (5) comprend un poste de préparation de commandes (49) pour des moyens auxiliaires source de chargement (2) et un poste de préparation de commandes (48) pour des moyens auxiliaires cible de chargement (6), chacun des postes de préparation de commandes (48, 49) étant relié au premier système de distribution (3) par des premiers moyens de transport (20, 21) qui amènent des moyens auxiliaires de chargement (2, 6) au poste de préparation de commandes respectif (48, 49), et au deuxième système de distribution (36) par des deuxièmes moyens de transport (41, 42) qui évacuent des moyens auxiliaires de chargement (2, 6) du poste de préparation de commandes (48, 49), **caractérisé en ce que** les postes de préparation de commandes (48, 49) du système de préparation de commandes (5) sont conçus selon l'une quelconque des revendications 1 à 8.

12. Système de stockage selon la revendication 11, **caractérisé par** le deuxième système de distribution automatisé (36) pour le transport de moyens auxiliaires source de chargement (2) vers des moyens de transport de stockage de retour (23) et/ou le transport de moyens auxiliaires cible de chargement (6) vers des commandes de préparation de commandes entre les places de travail de préparation de commandes (4), auquel sont raccordés les postes de préparation de commandes (48, 49) des places de travail de préparation de commandes (4) par les deuxièmes moyens de transport (41, 42) qui évacuent des moyens auxiliaires de chargement respectivement source et/ou cible (2, 6) du poste de préparation de commandes (48, 49).

13. Procédé de préparation de commandes d'articles provenant de moyens auxiliaires de chargement (2) tels un récipient, un carton, un plateau etc. par un opérateur de préparation de commandes (7), à un poste de préparation de commandes (48, 49) agencé à la suite de moyens de transport automatisés (20, 21, 41, 42) disposés à des niveaux différents, des moyens auxiliaires de chargement (2, 6) étant amenés au poste de préparation de commandes (48, 49) sur des premiers moyens de transport (20, 21) et des moyens auxiliaires de chargement (2, 6) étant évacués du poste de préparation de commandes (48, 49) sur des deuxièmes moyens de transport (41, 42), lequel poste comprend un dispositif de mise à disposition (61) de moyens auxiliaires de transport, un premier dispositif de transport automatisé de moyens auxiliaires de chargement avec une première unité de réception (62) pour amener des moyens auxiliaires de chargement (2, 6) au dispositif de mise à disposition (61) de moyens auxiliaires de chargement et un deuxième dispositif de transport automatisé de moyens auxiliaires de chargement avec une deuxième unité de réception (63) pour évacuer des moyens auxiliaires de chargement (2, 6) du dispositif de mise à disposition (61) de moyens auxiliaires de chargement, où un moyen auxiliaire de chargement (2, 6) est transporté par les premiers moyens de transport (20, 21) via la première unité de réception (62) au dispositif de mise à disposition (61) et est mis à disposition près du dispositif de mise à disposition (61) de moyens auxiliaires de chargement pour grouper des articles et est transporté, après le groupement des articles, du dispositif de mise à disposition (61) via la deuxième unité de réception (63) au deuxièmes moyens de transport (41, 42), **caractérisé en ce que** la première unité de réception (62) et la deuxième unité de réception (63) sont simultanément mises en mouvement pendulaire, par au moins un moyen d'entraînement en traction (68) d'un entraînement commun en positionnement (65), dans la direction respective des directions opposées de mouvement (85) le long d'un chemin de transport (64) entre les moyens de transport (20, 21, 41, 42), de façon qu'un premier moyen auxiliaire de chargement (2, 6) est transporté entre les uns des moyens de transport (20, 21, 41, 42) et l'une des unités de réception (62, 63) et un deuxième moyen auxiliaire de réception (2, 6) est mis à disposition par l'autre des unités de réception (62, 63) près du dispositif de mise à disposition (61).

14. Procédé selon la revendication 13, **caractérisé en ce que**, dans un premier cycle de mouvement pour l'évacuation d'un premier moyen auxiliaire de chargement (2, 6) du dispositif de mise à disposition (61) et pour l'amenée d'un deuxième moyen auxiliaire de chargement (2, 6) au dispositif de mise à disposition (61), les unités de réception (62, 63) accouplées en mouvement l'une à l'autre sont mues dans une première direction de mouvement (85) vers des positions respectives de transfert ou de réception (96, 100, 97, 101) près des moyens de transport (20, 21, 41, 42) et du dispositif de mise à disposition (61).

15. Procédé selon la revendication 13 ou 14, **caractérisé en ce que**, après le transfert du premier moyen auxiliaire de chargement (2, 6) de l'une des unités de réception (63) aux moyens de transport (41, 42) et du deuxième moyen auxiliaire de chargement (2, 6) de l'autre des unités de réception (62) au dispositif de mise à disposition (61), dans un deuxième cycle de mouvement suivant, les unités de réception (62, 63) accouplées en mouvement l'une à l'autre sont mues en retour, à l'opposé de la première direction de mouvement (85), vers la position de transfert (96, 100) près des moyens de transport (20, 21) et du dispositif de mise à disposition (61).

16. Procédé selon la revendication 13 ou 14, **caractérisé en ce que**, après le transfert du premier moyen auxiliaire de chargement (2, 6) de l'une des unités de réception (63) au dispositif de mise à disposition (61) et du deuxième moyen auxiliaire de chargement (2, 6) de l'autre des unités de réception (62) aux moyens de transport (20, 21), dans un deuxième cycle de mouvement suivant, les unités de réception (62, 63) accouplées en mouvement l'une à l'autre sont mues en retour, à l'opposé de la première direction de mouvement (85), vers la position de transfert (97, 101) près des moyens de transport (41, 42) et du dispositif de mise à disposition (61).
